# EUROPEAN PATENT APPLICATION

(11) **EP 4 808 005 A1**
(43) Date of publication of application: **16.09.2026**
(21) Application number: 23957972.5
(22) Date of filing: 09.11.2023
(51) Int. Cl.: H04B 7/0456

(54) **PRECODING METHOD, AND DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN)
(74) Representative: RGTH
(86) International application number: PCT/CN2023/130700
(87) International publication number: WO 2025/097364

(57) **Abstract**

The present application relates to a precoding method, and a device. The method comprises: a terminal device receiving a TPMI sent by a network device; on the basis of the TPMI, the terminal device determining a precoding matrix from a codebook corresponding to the number of transport layers, wherein each codeword in the codebook is a three-row matrix; and the terminal device using the precoding matrix to perform precoding on uplink data. By means of the embodiments of the present application, a codebook involving three antenna ports can be provided for a terminal device, uplink transmission based on three antenna ports can be supported, and precoding is performed on the uplink transmission of a three-antenna terminal, thereby improving the spectral efficiency and the peak rate.

## Description

### TECHNICAL FIELD

The present disclosure relates to the field of communications, and more specifically, to a precoding method and a device.

### BACKGROUND

When transmitting uplink data, a terminal needs to perform precoding processing on the uplink data to obtain an uplink precoding gain. Precoding processing is generally divided into two parts: analog domain processing and digital domain processing. The analog domain processing targets a transmitted analog signal, and typically maps a radio frequency signal to a physical antenna via beamforming. The digital domain processing targets a digital signal, and typically is performed at a baseband, where the digital signal is precoded using a precoding matrix, and data from a transmission layer is mapped to a radio frequency port. In uplink codebook-based precoding technology, the precoding matrix is selected from a predefined codebook. However, the current codebook only supports 2-antenna ports and 4-antenna ports. For terminals with 3 transmit antennas, since existing technology lacks a 3-antenna port codebook, these terminals may only fall back to 2-antenna port transmission, that is, using a 2-port codebook for uplink transmission, which affects the spectrum efficiency and peak rate.

### SUMMARY

Embodiments of the present disclosure provide a precoding method and a device, which can provide a 3-antenna port codebook for a terminal device, enabling a terminal with 3 transmit antennas to be capable of using the corresponding codebook for uplink data precoding, thereby improving the spectrum efficiency and peak rate.

Embodiments of the present disclosure provide a precoding method, including:
receiving, by a terminal device, a transmit precoding matrix indicator (TPMI) transmitted by a network device;
determining, by the terminal device, a precoding matrix from a codebook corresponding to a number of transmission layers based on the TPMI, where each codeword in the codebook is a matrix with 3 rows; and
performing, by the terminal device, precoding on uplink data using the precoding matrix.

Embodiments of the present disclosure provide a precoding method, including:
transmitting, by a network device, a TPMI to a terminal device; and
receiving, by the network device, data precoded using a precoding matrix by the terminal device;
where the precoding matrix is determined from a codebook corresponding to a number of transmission layers based on the TPMI, and each codeword in the codebook is a matrix with 3 rows.

Embodiments of the present disclosure provide a terminal device, including:
a first transceiver module, configured to receive a TPMI transmitted by a network device; and
a first processing module, configured to determine a precoding matrix from a codebook corresponding to a number of transmission layers based on the TPMI, and performs precoding on uplink data using the precoding matrix, where each codeword in the codebook is a matrix with 3 rows.

Embodiments of the present disclosure provide a network device, including:
a second transceiver module, configured to transmit a TPMI to a terminal device; and receive data precoded using a precoding matrix by the terminal device;
where the precoding matrix is determined from a codebook corresponding to a number of transmission layers based on the TPMI, and each codeword in the codebook is a matrix with 3 rows.

Embodiments of the present disclosure provide a terminal device, including: a processor and a memory, where the memory is configured to store a computer program, and the processor is configured to invoke and run the computer program stored in the memory, to enable the terminal device to perform the precoding method.

Embodiments of the present disclosure provide network device, including: a processor and a memory, where the memory is configured to store a computer program, and the processor is configured to invoke and run the computer program stored in the memory, to enable the network device to perform the precoding method.

Embodiments of the present disclosure provide a chip, configured to implement the precoding method.

Specifically, the chip includes: a processor, configured to invoke a computer program from a memory and run the computer program, to enable a device equipped with the chip to perform the precoding method.

Embodiments of the present disclosure provide a computer-readable storage medium, configured to store a computer program, where the computer program, when executed by a device, enables the device to perform the precoding method.

Embodiments of the present disclosure provide a computer program product, including: computer program instructions, where the computer program instructions enable a computer to perform the precoding method.

Embodiments of the present disclosure provide a computer program, where the computer program, when executed on a computer, enables the computer to perform the precoding method.

In the embodiments of the present disclosure, the precoding matrix determined by the terminal device based on the TPMI is a matrix with 3 rows, which can support the uplink transmission based on three antenna ports, so as to perform precoding on the uplink transmission of the 3-antenna terminal, thereby improving the spectrum efficiency and peak rate.

### DRAWINGS

FIG. 1 exemplarily illustrates a communication system 100.
FIG. 2 is a schematic diagram of codebook-based PUSCH transmission.
FIG. 3 is a schematic flowchart of a precoding method 300 according to an embodiment of the present disclosure.
FIG. 4 is a schematic flowchart of a precoding method 400 according to an embodiment of the present disclosure.
FIG. 5 is a schematic block diagram of a terminal device 500 according to an embodiment of the present disclosure.
FIG. 6 is a schematic block diagram of a network device 600 according to an embodiment of the present disclosure.
FIG. 7 is a schematic block diagram of a network device 700 according to an embodiment of the present disclosure.
FIG. 8 is a schematic structural diagram of a communication device 800 according to an embodiment of the present disclosure.
FIG. 9 is a schematic structural diagram of a chip 900 according to an embodiment of the present disclosure.

### DETAILED EMBODIMENTS

The technical solutions of the embodiments of the present disclosure are described below with reference to the drawings in the embodiments of the present disclosure.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-Generation (5G) system, or other communication systems.

Generally, the number of connections supported by a traditional communication system is limited and is easy to implement. However, with the development of communication technologies, a mobile communication system will not only support traditional communication but also support, for example, device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

In an embodiment, the communication system in the embodiments of the present disclosure may be applied to a scenario of carrier aggregation (CA), or may be applied to a scenario of dual connectivity (DC), or may be applied to a scenario of standalone (SA) deployment.

In an embodiment, the communication system in the embodiments of the present disclosure may be applied to an unlicensed spectrum, where the unlicensed spectrum may also be considered as a shared spectrum. Alternatively, the communication system in the embodiments of the present disclosure may also be applied to a licensed spectrum, where the licensed spectrum may also be considered as a non-shared spectrum.

Various embodiments are described in conjunction with a network device and a terminal device in the embodiments of the present disclosure, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus, etc.

The terminal device may be a station (STA) in a WLAN, which may be a cellular phone; a cordless phone; a session initiation protocol (SIP) phone; a wireless local loop (WLL) station; a personal digital assistant (PDA) device; a handheld device or a computing device having a wireless communication function; or other processing devices, in-vehicle devices or wearable devices connected to a wireless modem; a terminal device in a next-generation communication system such as the NR network; or a terminal device in a future evolved public land mobile network (PLMN) network; etc.

In the embodiments of the present disclosure, the terminal device may be deployed on land, including indoors or outdoors, handheld, wearable, or in-vehicle; the terminal device may also be deployed on water (e.g., ships, etc.); and the terminal device may also be deployed in the air (e.g., on an airplane, a balloon, or satellite, etc.).

In the embodiments of the present disclosure, the terminal device may be a mobile phone, a Pad, a computers having a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, etc.

As an example but not a limitation, in the embodiments of the present disclosure, the terminal device may also be a wearable device. The wearable device, also known as a wearable smart device, is a general term for devices designed and developed by performing the intellectualized design on daily wear by applying the wearable technology, such as glasses, gloves, watches, clothing, and shoes. The wearable device is a portable device that can be worn directly on the body or integrated into the clothing or accessory of the user. The wearable device is not only a hardware device, but also achieves a powerful function through software support, data interaction, and cloud interaction. A generalized wearable smart device include a device that is fully functional, large in size, and may implement complete or partial functions without relying on a smartphone, such as a smart watch or smart glasses, as well as a device that focuses on a certain type of application function and needs to be used in conjunction with other devices like smartphones, such as various smart bands or smart jewelry for vital sign monitoring.

In the embodiments of the present disclosure, the network device may be a device for communicating with a mobile device. The network device may be an access point (AP) in the WLAN; a base transceiver station (BTS) in the GSM or CDMA; or may be a base station (NodeB, NB) in the WCDMA; or may be an evolutional base station (evolutional Node B, eNB or eNodeB) in the LTE; or a relay station or an access point; or an in-vehicle device, a wearable device, and a network device (gNB) in the NR network or a network device in the future evolved PLMN network, or a network device in the NTN network.

As an example but not a limitation, in the embodiments of the present disclosure, the network device may have mobile characteristics, for example, the network device may be a mobile device. Optionally, the network device may be a satellite or a balloon station. For example, the satellite may be a low Earth orbit (LEO) satellite, a medium Earth orbit (MEO) satellite, a geostationary Earth orbit (GEO) satellite, a high elliptical orbit (HEO) satellite, etc. Optionally, the network device may also be a base station deployed on land, water, or other locations.

In the embodiments of the present disclosure, the network device may provide services for a cell, and a terminal device performs communication with the network device through transmission resources (e.g., frequency-domain resources, or spectrum resources) utilized by the cell. The cell may be a cell corresponding to the network device (e.g., a base station), and the cell may belong to a macro base station or belong to a base station corresponding to a small cell. Here, the small cell here may include a metro cell, a micro cell, a pico cell, a femto cell, etc. These small cells have the characteristics of small coverage and low transmit power, which are suitable for providing high-speed data transmission services.

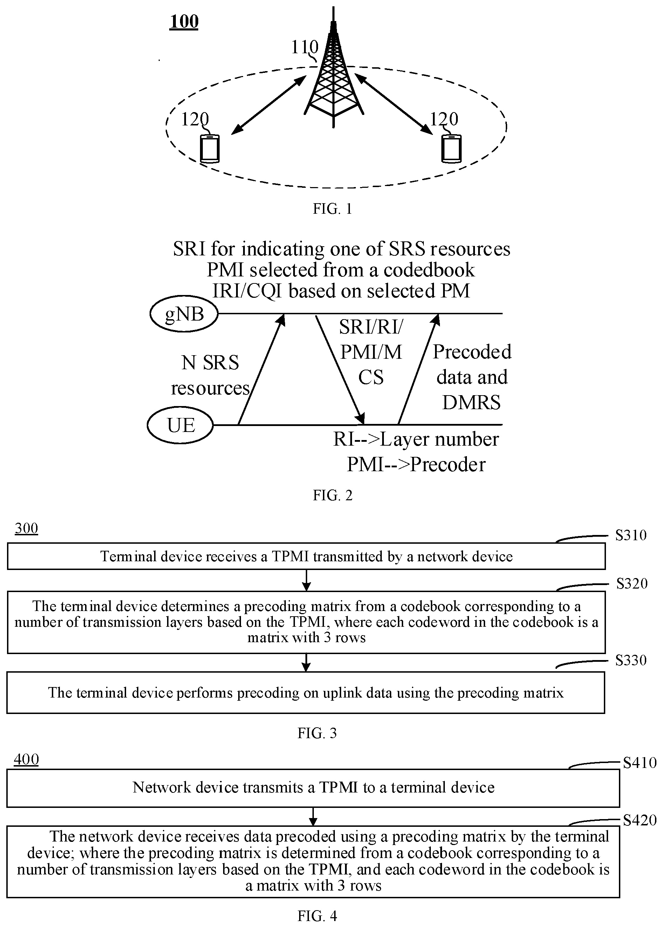

FIG. 1 exemplarily illustrates a communication system 100. The communication system includes a network device 110 and two terminal devices 120. In an embodiment, the communication system 100 may include multiple network devices 110, and the coverage range of each network device 110 may include terminal devices 120 of other quantities, which are not limited in the embodiments of the present disclosure.

In an embodiment, the communication system 100 may also include other network entities, such as, a mobility management entity (MME), and an access and mobility management function (AMF), which are not limited in the embodiments of the present disclosure.

Here, the network device may also include an access network device and a core network device. That is, the wireless communication system also includes multiple core networks for communicating with an access network device. The access network device may be an evolved base station (evolved Node B, referred as eNB or e-NodeB for short), a macro base station, a micro base station (also referred to as a "small base station"), a pico base station, an access point (AP), a transmission point (TP), or a new generation base station (generation Node B, gNodeB) in a long-term evolution (LTE) system, a next mobile communication system (next radio, NR) system or an authorized auxiliary access long-term evolution (LAA-LTE) system.

It should be understood that a device having the communication function in the network/system of the embodiments of the present disclosure may be referred to as a communication device. Taking the communication system illustrated in FIG. 1 as an example, the communication devices may include the network device and the terminal devices having the communication function. The network device and the terminal device may be specific devices in the embodiments of the present disclosure, which will not be repeated here. The communication device may also include other devices in the communication system, such as a network controller, a mobility management entity, and other network entities, which are not limited in the embodiments of the present disclosure.

It should be understood that the terms "system" and "network" herein are often used interchangeably. The term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

It should be understood that that the term "indicate/indicated/indicating/indication" mentioned in the embodiments of the present disclosure may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the description of the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

To facilitate understanding of the technical solutions of the embodiments of the present disclosure, the related art of the embodiments of the present disclosure are described below. The following related art, as optionally solutions, may be arbitrarily combined with the technical solutions of the embodiments of the present disclosure, and all of such combinations fall within the protection scope of the embodiments of the present disclosure.

### I. Uplink Codebook Transmission

When transmitting uplink data, for example, when transmitting a physical uplink shared channel (PUSCH), a terminal needs to perform precoding processing on the uplink data to obtain an uplink precoding gain. Precoding processing is generally divided into two parts: analog domain processing and digital domain processing. The analog domain processing targets a transmitted analog signal, and typically maps a radio frequency signal to a physical antenna via beamforming. The digital domain processing targets a digital signal, and typically is performed at a baseband, where the digital signal is precoded using a precoding matrix, and data from a transmission layer is mapped to a radio frequency port. Since the number of radio frequency channels for the terminal is limited, two processing modes are generally employed simultaneously, that is, performing precoding on the digital signal and then applying beamforming to the analog signal. Depending on the difference of precoding modes, PUSCH transmission is categorized into codebook-based transmission and non-codebook-based transmission.

FIG. 2 is a schematic diagram of the codebook-based PUSCH transmission. As illustrated in FIG. 2, in the uplink codebook-based precoding mode, a network side configures a dedicated sounding reference signal (SRS) resource set for a terminal for codebook transmission. The terminal transmits SRS on multiple SRS resources of the set, with SRS on each SRS resource using a different beam. The network side selects the best SRS resource from the multiple SRS resources to obtain uplink channel state information (CSI) and meanwhile indicates a resource index to the terminal via an SRS resource indicator (SRI), so as to indicate the terminal to use a beam corresponding to the SRS resource to perform analog beamforming on the data. Meanwhile, the network side indicates a rank indicator (RI) and a transmit precoding matrix indicator (TPMI) through downlink control information (DCI). The terminal determines an uplink precoding matrix corresponding to the TPMI from the codebook based on the RI and TPMI.

### II. Uplink Codebook Design

In the related art, 2-port PUSCH transmission and 4-port PUSCH transmission are supported in the uplink. For cases of different numbers of antenna ports, codebooks used by different transmission layers (the difference of multiple access manners is further distinguished for a single-layer transmission) are different. In a case where the terminal device only supports a non-coherent codebook, each data stream may only be transmitted on one antenna port, and one antenna port may only transmit one data stream. In a case where the terminal device supports a partially coherent codebook, each data stream may be transmitted on coherent antenna ports. In other words, the data stream cannot be transmitted simultaneously on non-coherent antenna ports. Specifically, in a case where a relative phase variation of signals transmitted on antenna ports falls within a certain range, the antenna ports are considered coherent; otherwise, the antenna ports are non-coherent.

### III. Uplink Full Power Transmission

For the non-coherent codebook and the partially coherent codebook, only a part of antenna ports transmit signals. In this case, the terminal device is unable to perform an uplink transmission at full power, which affects the uplink coverage. For example, a terminal device with 2 antenna ports supports a maximum transmit power of 23 dBm, but each antenna port only supports a maximum transmit power of 20 dBm. When using only one of the two antenna ports for transmission, the terminal device cannot support the full power transmission of 23 dBm. Here, the full power transmission refers to that the terminal device is capable of performing a PUSCH transmission at the maximum transmit power supported by the device. In the related art, an uplink full power transmission manner has been introduced, including a full power transmission mode 1 and a full power transmission mode 2.

In the full power transmission mode 1, for a terminal that only support the non-coherent codebook and the partially coherent codebook (that is, only a part of antenna ports transmit the PUSCH), the network device may indicate a part of codewords of a fully coherent codebook (all antennas transmit the PUSCH), thereby enabling the terminal device to be capable of performing the uplink transmission at the full power.

In the full power transmission mode 2, the terminal device may report, via UE capability, codewords that support the full power transmission in the non-coherent codebook and the partially coherent codebook, where different codewords correspond to different radio frequency architectures. The network device may indicate these codewords, to enable the terminal device to be capable of performing the uplink transmission at the full power. In addition, the network device may configure a less number of antenna ports (e.g., configuring 2-antenna port codeword or 1-antenna port codeword to a terminal with 4 antenna ports) to enable the terminal device to achieve the full power transmission through antenna virtualization.

At present, the uplink precoding technology supports a 2-antenna port codebook and a 4-antenna port codebook. However, some terminals have 3 transmit antennas. Since existing technology lacks a 3-antenna port codebook, these terminals have to fall back to 2-antenna port transmission, that is, using the 2-port codebook for uplink transmission. Since the gain of 3 transmit antennas is not fully utilized, the spectrum efficiency is impacted accordingly. In addition, since the 2-port transmission at most only supports two-stream transmission, the peak rate is also impacted.

The embodiments of the present disclosure propose a precoding method. FIG. 3 is a schematic flowchart of a precoding method 300 according to an embodiment of the present disclosure. This method may optionally be applied to, but is not limited to the system illustrated in FIG. 1 or FIG. 2. The method includes at least part of the following content.

In S310, a terminal device receives a TPMI transmitted by a network device.

In S320, the terminal device determines a precoding matrix from a codebook corresponding to a number of transmission layers based on the TPMI, where each codeword in the codebook is a matrix with 3 rows.

In S330, the terminal device performs precoding on uplink data using the precoding matrix.

By using the codebook designed in the embodiments of the present disclosure, i.e., the codebook including 3-row matrices, the terminal device can support an uplink transmission based on 3 antenna ports, which, compared to the related art where the 3-antenna terminal can only degenerate into the 2-antenna port transmission, can take full advantage of the antenna gain of the 3-antenna transmission, thereby effectively improving the spectrum efficiency; moreover, 3-layer uplink transmission is supported, thereby increasing the peak rate.

In some implementations, before the terminal device receives the TPMI transmitted by the network device, the method may further include: the terminal device transmits an SRS to the network device, where the SRS includes 3 antenna ports.

By transmitting the SRS including 3 antenna ports to the network device, the terminal device can notify the network device that the terminal device has 3 antenna ports. Therefore, the TPMI transmitted by the network device to the terminal device can be used to determine a precoding matrix from a codebook including 3-row matrices, so that the uplink transmission based on the 3 antenna ports is supported.

In some implementations, the network device may indicate, in a same information field, the TPMI and the number of transmission layers. The terminal device receiving the TPMI transmitted by the network device may include: the terminal device receiving the TPMI and indication information of the number of transmission layers transmitted by the network device, where the TPMI and the indication information of the number of transmission layers are indicated through the same information field.

In some implementations, in a case where the number of transmission layers is 2, the codebook includes a first codeword, and the first codeword is a 3-row by 2-column matrix. Two rows of the first codeword each include two non-zero quadrature phase shift keying (QPSK) elements, and another row includes two 0 elements. Here, the non-zero QPSK element may include 1, -1, j, and -j. In all codewords proposed in the embodiments of the present disclosure, the non-zero QPSK element may include 1, -1, j, and -j, which will not be repeated hereafter.

In an example, in a case where the number of transmission layers is 2, the codebook includes the first codeword, where two rows of the first codeword each include 2 non-zero QPSK elements, and another row includes two 0 elements.

In some embodiments, the first codeword includes at least two of following codewords: $\frac{1}{\sqrt{6}} \left[\begin{matrix}1 & 1 \\ 1 & - 1 \\ 0 & 0\end{matrix}\right] , \frac{1}{\sqrt{6}} \left[\begin{matrix}1 & 1 \\ j & - j \\ 0 & 0\end{matrix}\right] , \frac{1}{\sqrt{6}} \left[\begin{matrix}1 & 1 \\ 0 & 0 \\ 1 & - 1\end{matrix}\right] , \frac{1}{\sqrt{6}} \left[\begin{matrix}1 & 1 \\ 0 & 0 \\ j & - j\end{matrix}\right] , \frac{1}{\sqrt{6}} \left[\begin{matrix}0 & 0 \\ 1 & 1 \\ 1 & - 1\end{matrix}\right] , and \frac{1}{\sqrt{6}} \left[\begin{matrix}0 & 0 \\ 1 & 1 \\ j & - j\end{matrix}\right] .$

Here, the coefficient $\frac{1}{\sqrt{6}}$ in the first codeword is used for power normalization, and a value of the coefficient depends on whether the coefficient is used for power normalization. The coefficient may also take other values, which is not limited in the embodiments of the present disclosure. For example, the coefficient in the codebook may be one of following: 1, $\frac{1}{\sqrt{3}}$*,* 1/2, $\frac{1}{\sqrt{5}}$, and $\frac{1}{\sqrt{6}}$ , etc. In all codewords proposed in the embodiments of the present disclosure, the coefficients in the codewords may take various different values, which will not be repeated hereafter.

By using the first codeword, in a case where the performance of an antenna port group including 1 antenna port is poor, for example, due to performance degradation caused by blocking or deep fading, the terminal device may select a port group including 2 coherent antenna ports to transmit two transmission layers, ensuring the performance of uplink transmission compared to using another antenna port.

In some embodiments, in a case where the number of transmission layers is 3, the codebook includes a second codeword, and the second codeword is a 3-row by 3-column matrix. Two rows of the second codeword each include two non-zero QPSK elements and a 0 element, and another row includes one non-zero QPSK element and two 0 elements, where the two non-zero QPSK elements and the one non-zero QPSK element are located in different columns.

In some embodiments, the second codeword includes at least two of following codewords: $\frac{1}{\sqrt{5}} \left[\begin{matrix}1 & 1 & 0 \\ 1 & - 1 & 0 \\ 0 & 0 & 1\end{matrix}\right] , \frac{1}{\sqrt{5}} \left[\begin{matrix}1 & 1 & 0 \\ j & - j & 0 \\ 0 & 0 & 1\end{matrix}\right] , \frac{1}{\sqrt{5}} \left[\begin{matrix}1 & 1 & 0 \\ 0 & 0 & 1 \\ 1 & - 1 & 0\end{matrix}\right] , \frac{1}{\sqrt{5}} \left[\begin{matrix}1 & 1 & 0 \\ 0 & 0 & 1 \\ j & - j & 0\end{matrix}\right] , \frac{1}{\sqrt{5}} \left[\begin{matrix}0 & 0 & 1 \\ 1 & 1 & 0 \\ 1 & - 1 & 0\end{matrix}\right] ,$ and $\frac{1}{\sqrt{5}} \left[\begin{matrix}0 & 0 & 1 \\ 1 & 1 & 0 \\ j & - j & 0\end{matrix}\right] .$

By using the second codeword, the terminal device can allocate different transmission layers to different antenna port groups (the coherent antenna ports jointly transmit two transmission layers, and the non-coherent antenna port transmit one transmission layer), thereby achieving the effect of full power transmission while reducing interference between transmission layers, to obtain better uplink transmission performance.

In some implementations, in a case where the codebook is a non-coherent codebook or a partially coherent codebook, and the number of transmission layers is 1,
when the network device configures the full power transmission mode 1, the codebook includes a third codeword; and
when the network device does not configure the full power transmission mode 1, the codebook does not include the third codeword,
where the third codeword includes at least one of following codewords: $\frac{1}{\sqrt{3}} \left[\begin{matrix}1 \\ 1 \\ 1\end{matrix}\right] , \frac{1}{\sqrt{3}} \left[\begin{matrix}1 \\ 1 \\ j\end{matrix}\right] , \frac{1}{\sqrt{3}} \left[\begin{matrix}1 \\ 1 \\ - 1\end{matrix}\right] , \frac{1}{\sqrt{3}} \left[\begin{matrix}1 \\ 1 \\ - j\end{matrix}\right] , \frac{1}{\sqrt{3}} \left[\begin{matrix}1 \\ j \\ 1\end{matrix}\right] , \frac{1}{\sqrt{3}} \left[\begin{matrix}1 \\ j \\ j\end{matrix}\right] , \frac{1}{\sqrt{3}} \left[\begin{matrix}1 \\ j \\ - 1\end{matrix}\right] , \frac{1}{\sqrt{3}} \left[\begin{matrix}1 \\ j \\ - j\end{matrix}\right] ,$ $\frac{1}{\sqrt{3}} \left[\begin{matrix}1 \\ - 1 \\ 1\end{matrix}\right] , \frac{1}{\sqrt{3}} \left[\begin{matrix}1 \\ - 1 \\ j\end{matrix}\right] , \frac{1}{\sqrt{3}} \left[\begin{matrix}1 \\ - 1 \\ - 1\end{matrix}\right] , \frac{1}{\sqrt{3}} \left[\begin{matrix}1 \\ - 1 \\ - j\end{matrix}\right] , \frac{1}{\sqrt{3}} \left[\begin{matrix}1 \\ - j \\ 1\end{matrix}\right] , \frac{1}{\sqrt{3}} \left[\begin{matrix}1 \\ - j \\ j\end{matrix}\right] , \frac{1}{\sqrt{3}} \left[\begin{matrix}1 \\ - j \\ - 1\end{matrix}\right] , or \frac{1}{\sqrt{3}} \left[\begin{matrix}1 \\ - j \\ - j\end{matrix}\right] ,$
where the third codeword is a 3-row by 1-column matrix.

In some implementations, before receiving the TPMI transmitted by the network device, the terminal device may report a UE capability to the network device, where the UE capability may indicate that the terminal device supports the full power mode 1. In a case where the terminal device supports the full power mode 1, the network device may configure the full power mode 1 for the terminal device or may not configure the full power mode 1 for the terminal device.

In some implementations, in a case where the codebook is a non-coherent codebook and the number of transmission layers is 2,
when the network device configures the full power transmission mode 1, the codebook includes a fourth codeword; and
when the network device does not configure the full power transmission mode 1, the codebook does not include the fourth codeword,
where the fourth codeword includes at least one of following codewords: $\frac{1}{\sqrt{3}} \left[\begin{matrix}1 & 0 \\ 1 & 0 \\ 0 & 1\end{matrix}\right] , \frac{1}{\sqrt{3}} \left[\begin{matrix}1 & 0 \\ - 1 & 0 \\ 0 & 1\end{matrix}\right] , \frac{1}{\sqrt{3}} \left[\begin{matrix}1 & 0 \\ j & 0 \\ 0 & 1\end{matrix}\right] , \frac{1}{\sqrt{3}} \left[\begin{matrix}1 & 0 \\ - j & 0 \\ 0 & 1\end{matrix}\right] , \frac{1}{\sqrt{3}} \left[\begin{matrix}1 & 0 \\ 0 & 1 \\ 1 & 0\end{matrix}\right] , \frac{1}{\sqrt{3}} \left[\begin{matrix}1 & 0 \\ 0 & 1 \\ - 1 & 0\end{matrix}\right] ,$ $\frac{1}{\sqrt{3}} \left[\begin{matrix}1 & 0 \\ 0 & 1 \\ j & 0\end{matrix}\right] , \frac{1}{\sqrt{3}} \left[\begin{matrix}1 & 0 \\ 0 & 1 \\ - j & 0\end{matrix}\right] , \frac{1}{\sqrt{3}} \left[\begin{matrix}0 & 1 \\ 1 & 0 \\ 1 & 0\end{matrix}\right] , \frac{1}{\sqrt{3}} \left[\begin{matrix}0 & 1 \\ 1 & 0 \\ - 1 & 0\end{matrix}\right] , \frac{1}{\sqrt{3}} \left[\begin{matrix}0 & 1 \\ 1 & 0 \\ j & 0\end{matrix}\right] , or \frac{1}{\sqrt{3}} \left[\begin{matrix}0 & 1 \\ 1 & 0 \\ - j & 0\end{matrix}\right] ,$
where the fourth codeword is a 3-row by 2-column matrix.

In an example, in a case where the codebook is a non-coherent codebook, the third codeword is $\frac{1}{\sqrt{3}} \left[\begin{matrix}1 \\ 1 \\ j\end{matrix}\right]$ or $\frac{1}{\sqrt{3}} \left[\begin{matrix}1 \\ 1 \\ 1\end{matrix}\right]$, and the fourth codeword is $\frac{1}{\sqrt{3}} \left[\begin{matrix}1 & 0 \\ 1 & 0 \\ 0 & 1\end{matrix}\right]$ or $\frac{1}{\sqrt{3}} \left[\begin{matrix}1 & 0 \\ 0 & 1 \\ 1 & 0\end{matrix}\right]$.

In an example, in a case where the codebook is a partially coherent codebook, the third codeword is $\frac{1}{\sqrt{3}} \left[\begin{matrix}1 \\ 1 \\ j\end{matrix}\right]$ or $\frac{1}{\sqrt{3}} \left[\begin{matrix}1 \\ 1 \\ 1\end{matrix}\right]$.

In the third codeword and the fourth codeword, all 3 antenna ports are used for transmitting the uplink signal (even if these antenna ports are not coherent with each other); the terminal device using the third codeword or the fourth codeword for precoding can take full advantage of all 3 antenna ports to achieve the effect of full power transmission, thereby improving the uplink coverage for the terminal device with 3 antenna ports.

In some implementations, before the terminal device receives the TPMI transmitted by the network device, the method may further include:
the terminal device transmitting a precoding matrix set capable of supporting the full power transmission or a TPMI set capable of supporting the full power transmission to the network device, where a TPMI in the TPMI set corresponds to a precoding matrix in a predefined codebook, and both a precoding matrix in the precoding matrix set and the precoding matrix corresponding to the TPMI in the TPMI set are matrices with 3 rows.

After receiving the precoding matrix set capable of supporting the full power transmission or the TPMI set capable of supporting the full power transmission transmitted by the terminal device, the network device may indicate the precoding matrix in the precoding matrix set or the precoding matrix corresponding to the TPMI in the TPMI set, thereby enabling the terminal device to perform the uplink transmission at the full power.

In one manner, the terminal device transmits a bitmap to the network device, where each bit of the bitmap corresponds to a precoding matrix set capable of supporting the full power transmission or a TPMI set capable of supporting the full power transmission.

In the other manner, the terminal device indicates the precoding matrix set capable of supporting the full power transmission or the TPMI set capable of supporting the full power transmission, from multiple predefined precoding matrix sets or multiple predefined TPMI sets.

### 1. Regarding the first manner

(1) In some implementations, in a case where the terminal device only supports a non-coherent codebook, the bitmap includes 2 bits,
   where one bit indicates whether a precoding matrix $\frac{1}{\sqrt{3}} \left[\begin{matrix}1 \\ 0 \\ 0\end{matrix}\right]$ supports the full power transmission, or indicates whether a TPMI corresponding to the precoding matrix $\frac{1}{\sqrt{3}} \left[\begin{matrix}1 \\ 0 \\ 0\end{matrix}\right]$ supports the full power transmission; and
   the other bit indicates whether a precoding matrix $\frac{1}{\sqrt{3}} \left[\begin{matrix}1 & 0 \\ 0 & 1 \\ 0 & 0\end{matrix}\right]$ supports the full power transmission, or indicates whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission,
   where $\frac{1}{\sqrt{3}} \left[\begin{matrix}1 & 0 \\ 0 & 1 \\ 0 & 0\end{matrix}\right]$ may be replaced with $\frac{1}{\sqrt{3}} \left[\begin{matrix}1 & 0 \\ 0 & 0 \\ 0 & 1\end{matrix}\right]$.

In this manner, one bit of the two bits indicates whether using one antenna port (i.e., one power amplifier (PA)) supports the full power transmission, that is, whether the terminal device has one RF chain that support the full power transmission; and the other bit indicates whether using two antenna ports (i.e., two PAs) supports the full power transmission, that is, whether the terminal device has two RF chains that support the full power transmission. This method may be applied to scenarios where one or two antenna ports of the terminal device are capable of supporting the full power transmission.

Based on this manner, the terminal device only needs minimal signaling overhead to report how many antenna ports (i.e., PAs) being capable of supporting the full power transmission, so that the network device can schedule the corresponding number of antenna ports for uplink transmission, thereby improving the performance of uplink transmission.

(2) In some implementations, in a case where the terminal device only supports a non-coherent codebook, the bitmap includes 2 bits,
where one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or indicates whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission, or indicates whether TPMIs corresponding to the precoding matrices $\frac{1}{\sqrt{3}} \left[\begin{matrix}1 & 0 \\ 0 & 1 \\ 0 & 0\end{matrix}\right]$, $\frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission.

In this manner, one bit of the two bits indicates whether using any one antenna port (i.e., any one PA) supports the full power transmission, that is, whether any one RF chain of the terminal device supports the full power transmission; and the other bit indicates whether using any two antenna ports (i.e., any two PAs) supports the full power transmission, that is, whether any two RF chains of the terminal device support the full power transmission. This method may be applied to scenarios where any one or two antenna ports of the terminal device are capable of supporting the full power transmission.

(3) In some implementations, in a case where the terminal device only supports a non-coherent codebook, the bitmap includes 6 bits, and each bit respectively indicating following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission;
whether a precoding matrix $\frac{1}{\sqrt{3}} \left[\begin{matrix}1 & 0 \\ 0 & 1 \\ 0 & 0\end{matrix}\right]$ supports the full power transmission, or whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission;
whether a precoding matrix $\frac{1}{\sqrt{3}} \left[\begin{matrix}1 & 0 \\ 0 & 0 \\ 0 & 1\end{matrix}\right]$ supports the full power transmission, or whether a TPMI corresponding to the precoding matrix $\frac{1}{\sqrt{3}} \left[\begin{matrix}1 & 0 \\ 0 & 0 \\ 0 & 1\end{matrix}\right]$ supports the full power transmission; and
whether a precoding matrix $\frac{1}{\sqrt{3}} \left[\begin{matrix}0 & 0 \\ 1 & 0 \\ 0 & 1\end{matrix}\right]$ supports the full power transmission, or whether a TPMI corresponding to the precoding matrix $\frac{1}{\sqrt{3}} \left[\begin{matrix}0 & 0 \\ 1 & 0 \\ 0 & 1\end{matrix}\right]$ supports the full power transmission.

In this manner, each bit respectively indicates whether using one or two antenna ports supports the full power transmission.

Based on this manner, the terminal device can indicate which one or two antenna ports (i.e., PAs) are capable of supporting the full power transmission, thereby enabling the terminal device to use more flexible PA architecture and improving the flexibility of the network device in indicating TPMI(s). Meanwhile, the network device can schedule the corresponding antenna port(s) for uplink transmission, thereby enhancing the performance of uplink transmission.

(4) In some implementations, in a case where the terminal device supports a partially coherent codebook, the bitmap includes 2 bits; and at least following two cases exist.

Case 1: one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and the other bit indicates whether a precoding matrix $\frac{1}{\sqrt{3}} \left[\begin{matrix}1 \\ 0 \\ x\end{matrix}\right]$ supports the full power transmission, or whether a TPMI corresponding to the precoding matrix $\frac{1}{\sqrt{3}} \left[\begin{matrix}1 \\ 0 \\ x\end{matrix}\right]$ supports the full power transmission, where x is a non-zero QPSK element.

Case 2: one bit indicates whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and the other bit indicates whether a precoding matrix $\frac{1}{\sqrt{3}} \left[\begin{matrix}1 \\ x \\ 0\end{matrix}\right]$ supports the full power transmission, or whether a TPMI corresponding to the precoding matrix $\frac{1}{\sqrt{3}} \left[\begin{matrix}1 \\ x \\ 0\end{matrix}\right]$ supports the full power transmission, where x is a non-zero QPSK element.

In this manner, the antenna ports are actually divided into two groups. The first group includes two coherent antenna ports, and the second group includes one antenna port; and the two bits respectively indicate whether the two antenna port groups support the full power transmission.

(5) In some implementations, in a case where the terminal device supports a partially coherent codebook, the bitmap includes 2 bits; and at least the following two cases exist.

Case 1: one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and the other bit indicates whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission, where x is a non-zero QPSK element.

Case 2: one bit indicates whether $\frac{1}{\sqrt{3}} \left[\begin{matrix}0 \\ 0 \\ 1\end{matrix}\right]$ supports the full power transmission, or whether a TPMI corresponding to the $\frac{1}{\sqrt{3}} \left[\begin{matrix}0 \\ 0 \\ 1\end{matrix}\right]$ supports the full power transmission; and the other bit indicates whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, where x is a non-zero QPSK element.

In this manner, the antenna ports are actually divided into two groups. The first group includes two coherent antenna ports, and the second group includes one antenna port. The two bits respectively indicate whether the two antenna port groups support the full power transmission, and the content indicated by the two bits may also be interchanged.

(6) In some implementations, in a case where the terminal device supports a partially coherent codebook, the bitmap includes 2 bits,
where one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission, or whether TPMIs corresponding to the precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission,
where x is a non-zero QPSK element.

In this manner, one bit in the bitmap indicates whether using any one antenna port (i.e., any one PA) supports the full power transmission, that is, whether any one RF chain of the terminal device supports the full power transmission; and the other bit indicates whether using any two antenna ports (i.e., any two PAs) supports the full power transmission, that is, whether any two RF chains of the terminal device both support the full power transmission.

(7) In some implementations, in a case where the terminal device supports a partially coherent codebook, the bitmap includes 4 bits, and the 4 bits respectively indicate following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMI, corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission,
where x is a non-zero QPSK element.

### 2. Regarding the second manner

The terminal device indicates a precoding matrix set capable of supporting the full power transmission or a TPMI set capable of supporting the full power transmission from multiple predefined precoding matrix sets or multiple predefined TPMI sets.

In some implementations, each of the multiple predefined precoding matrix sets or each of the multiple predefined TPMI sets corresponds to a respective precoding matrix set that includes a first precoding matrix set, a second precoding matrix set and a third precoding matrix set; or includes a first precoding matrix set, a second precoding matrix set and a fourth precoding matrix set; or includes a first precoding matrix set, a second precoding matrix set, a third precoding matrix set and a fourth precoding matrix set,
where the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$; and
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

In other implementations, in a case where the terminal device supports a partially coherent codebook or a fully coherent codebook, each of the multiple predefined precoding matrix sets or each of the multiple predefined TPMI sets corresponds to a respective precoding matrix set that includes a first precoding matrix set, a second precoding matrix set, a fifth precoding matrix set and a sixth precoding matrix set, and further includes at least one of a third precoding matrix set or a fourth precoding matrix set,
where the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$;
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$;
the fifth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right]\right\}$; and
the sixth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ .

In still other implementations, in the case where the terminal device supports the partially coherent codebook or the fully coherent codebook, each of the multiple predefined precoding matrix sets or each of the multiple predefined TPMI sets corresponds to the respective precoding matrix set that may further include a seventh precoding matrix set and/or an eighth precoding matrix,
where the seventh precoding matrix set is $\left\{\frac{1}{\sqrt{3}}\left[\begin{matrix}0 \\ 1 \\ 0\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}0 \\ 0 \\ 1\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ; and
the eighth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right],\right.$ $\left.\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right],\right.$ $\frac{1}{\sqrt{3}} \left[\begin{matrix}1 \\ 0 \\ - j\end{matrix}\right] , \left.\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

Based on the above manner, terminals with various radio frequency architectures may report their full power transmission capabilities (i.e., precoding matrices that support the full power transmission), thereby enabling different types of terminals to perform the uplink full power transmission.

The embodiments of the present disclosure also propose a precoding method. FIG. 4 is a schematic flowchart of a precoding method 400 according to an embodiment of the present disclosure. This method may optionally be applied to, but is not limited to the system illustrated in FIG. 1 or FIG. 2. The method includes at least part of the following content.

In S410, a network device transmits a TPMI to a terminal device.

In S420, the network device receives data precoded using a precoding matrix by the terminal device, where the precoding matrix is determined from a codebook corresponding to a number of transmission layers based on the TPMI, and each codeword in the codebook is a matrix with 3 rows.

In some implementations, before the network device transmits the TPMI to the terminal device, the method may further include:
the network device receiving an SRS from the terminal device, where the SRS includes 3 antenna ports; and
the network device determining a precoding matrix from a pre-agreed codebook based on the SRS, where the TPMI is used to indicate the precoding matrix.

In some implementations, the network device may indicate, in a same information field, the TPMI and the number of transmission layers. The network device transmitting the TPMI to the terminal device may include: the network device transmitting the TPMI and indication information of the number of transmission layers to the terminal device, where the TPMI and the indication information of the number of transmission layers are indicated through the same information field.

For codewords included in the codebook, please refer to the relevant content in method 300 of the present disclosure, which will not be repeated here.

In some implementations, before the network device transmits the TPMI to the terminal device, the method may further include: the network device receiving, from the terminal device, a precoding matrix set capable of supporting a full power transmission or a TPMI set capable of supporting a full power transmission, where a TPMI in the TPMI set corresponds to a precoding matrix in the predefined codebook, and both a precoding matrix in the precoding matrix set and the precoding matrix corresponding to the TPMI in the TPMI set are matrices with 3 rows.

Here, the network device receiving, from the terminal device, the precoding matrix set capable of supporting the full power transmission or the TPMI set capable of supporting the full power transmission may include: the network device receiving a bitmap from the terminal device, where each bit of the bitmap corresponds to a precoding matrix set capable of supporting the full power transmission or a TPMI set capable of supporting the full power transmission; or, the network device receiving an indication transmitted by the terminal device, where the terminal device indicates the precoding matrix set capable of supporting the full power transmission or the TPMI set capable of supporting the full power transmission, from multiple predefined precoding matrix sets or multiple predefined TPMI sets.

For the specific content of the bitmap and the specific manner in which the terminal device indicates the precoding matrix set capable of supporting the full power transmission or the TPMI set capable of supporting the full power transmission, please refer to the relevant content in method 300 of the present disclosure, which will not be repeated here.

For specific examples in which the network device performs the method 400 of the embodiment, please refer to the relevant description of the network device in the method 300, which will not be repeated here for brevity.

Specific embodiments are specifically introduced below with reference to the drawings.

### Embodiment I:

The embodiment designs a partially coherent codebook. The embodiment includes the following operations.

In operation 1: the terminal device transmits an SRS for uplink codebook transmission, where the SRS is used by the network device to determine a TPMI.

In an example, the SRS is a 3-antenna port SRS, that is, an SRS resource of the SRS is configured with 3 antenna ports, and the usage of the SRS resource is configured as codebook.

In operation 2: the terminal device receives the TPMI transmitted by the network device.

In an example, the network device indicates the TPMI along with the indication information of the number of transmission layers to the terminal device through DCI or higher-layer signaling.

In operation 3: the terminal device determines a precoding matrix from a codebook corresponding to a current number of transmission layers based on the TPMI, where each codeword in the codebook is a matrix with 3 rows.

In operation 4: the terminal device performs precoding on data using the precoding matrix and transmits precoded data to the network device.

Here, the current number of transmission layers may be 1, 2, or 3.

Depending on whether the antenna ports are coherent with each other, 3 antenna ports may be divided into two antenna port groups: one group includes 2 coherent antenna ports (which may simultaneously transmit a PUSCH), and the other group includes 1 antenna port and is not coherent with the first antenna port group. That is, antenna ports belonging to an antenna port group are coherent, and antenna ports between different antenna port groups are non-coherent.

Several forms of the codebook in the embodiment are introduced below.
1. In a case where the number of transmission layers is 2, the codebook includes a first codeword, where two rows of the first codeword are non-zero QPSK elements, and another row includes zero elements. Antenna ports corresponding to the two rows of non-zero QPSK elements are coherent, and the two antenna ports and an antenna port corresponding to the zero element are non-coherent. The non-zero QPSK element may include 1, -1, j, and -j.

In an implementation, the first codeword includes at least two of following codewords: $\frac{1}{\sqrt{6}} \left[\begin{matrix}1 & 1 \\ 1 & - 1 \\ 0 & 0\end{matrix}\right] , \frac{1}{\sqrt{6}} \left[\begin{matrix}1 & 1 \\ j & - j \\ 0 & 0\end{matrix}\right] , \frac{1}{\sqrt{6}} \left[\begin{matrix}1 & 1 \\ 0 & 0 \\ 1 & - 1\end{matrix}\right] , \frac{1}{\sqrt{6}} \left[\begin{matrix}1 & 1 \\ 0 & 0 \\ j & - j\end{matrix}\right] , \frac{1}{\sqrt{6}} \left[\begin{matrix}0 & 0 \\ 1 & 1 \\ 1 & - 1\end{matrix}\right] , and \frac{1}{\sqrt{6}} \left[\begin{matrix}0 & 0 \\ 1 & 1 \\ j & - j\end{matrix}\right] .$

In an example, in a case where an antenna port 0 and an antenna port 1 are coherent, and both the antenna port 0 and the antenna port 1 are non-coherent with an antenna port 2, the partially coherent codebook whose number of transmission layers is 2 (Rank=2) may include following two codewords: $\left\{\frac{1}{\sqrt{6}}\left[\begin{matrix}1 & 1 \\ 1 & - 1 \\ 0 & 0\end{matrix}\right], \frac{1}{\sqrt{6}}\left[\begin{matrix}1 & 1 \\ j & - j \\ 0 & 0\end{matrix}\right]\right\} .$

In an example, in a case where the antenna port 0 and the antenna port 2 are coherent, and both the antenna port 0 and the antenna port 2 are non-coherent with the antenna port 1, the partially coherent codebook whose number of transmission layers is 2 (Rank=2) may include following two codewords: $\left\{\frac{1}{\sqrt{6}}\left[\begin{matrix}1 & 1 \\ 0 & 0 \\ 1 & - 1\end{matrix}\right], \frac{1}{\sqrt{6}}\left[\begin{matrix}1 & 1 \\ 0 & 0 \\ j & - j\end{matrix}\right]\right\} .$

In an example, in a case where the antenna port 1 and the antenna port 2 are coherent, and both the antenna port 1 and the antenna port 2 are non-coherent with the antenna port 0, the partially coherent codebook whose number of transmission layers is (Rank=2) may include following two codewords: $\left\{\frac{1}{\sqrt{6}}\left[\begin{matrix}0 & 0 \\ 1 & 1 \\ 1 & - 1\end{matrix}\right], \frac{1}{\sqrt{6}}\left[\begin{matrix}0 & 0 \\ 1 & 1 \\ j & - j\end{matrix}\right]\right\} .$

In the above examples, the two transmission layers are transmitted only on the two coherent antenna ports, while the other antenna port does not transmit data.

In this manner, in a case where the performance of the antenna port group including one antenna port is poor, for example, due to the performance degradation caused by blocking or deep fading, selecting a port group including two antenna ports to transmit the two transmission layers ensures uplink transmission performance compared to using the another antenna port.

2. In a case where the number of transmission layers is 3, the codebook includes a second codeword, where two rows of the second codeword each include two non-zero QPSK elements, and another row includes a non-zero QPSK element, where the remaining elements are zero, and the two non-zero QPSK elements and the non-zero QPSK element are in different columns. Antenna ports corresponding to the two rows including the two non-zero QPSK elements are coherent, and the two antenna ports are non-coherent with an antenna port corresponding to the row including one non-zero QPSK element. The non-zero QPSK element may include 1, -1, j, and -j.

In an embodiment, the second codeword includes at least two of following codewords: $\frac{1}{\sqrt{5}} \left[\begin{matrix}1 & 1 & 0 \\ 1 & - 1 & 0 \\ 0 & 0 & 1\end{matrix}\right] , \frac{1}{\sqrt{5}} \left[\begin{matrix}1 & 1 & 0 \\ j & - j & 0 \\ 0 & 0 & 1\end{matrix}\right] , \frac{1}{\sqrt{5}} \left[\begin{matrix}1 & 1 & 0 \\ 0 & 0 & 1 \\ 1 & - 1 & 0\end{matrix}\right] , \frac{1}{\sqrt{5}} \left[\begin{matrix}1 & 1 & 0 \\ 0 & 0 & 1 \\ j & - j & 0\end{matrix}\right] , \frac{1}{\sqrt{5}} \left[\begin{matrix}0 & 0 & 1 \\ 1 & 1 & 0 \\ 1 & - 1 & 0\end{matrix}\right] ,$ and $\frac{1}{\sqrt{5}} \left[\begin{matrix}0 & 0 & 1 \\ 1 & 1 & 0 \\ j & - j & 0\end{matrix}\right] .$

In an example, in a case where the antenna port 0 and the antenna port 1 are coherent, and both the antenna port 0 and the antenna port 1 are non-coherent with the antenna port 2, the partially coherent codebook whose number of transmission layers is 3 (Rank=3) may include following two codewords: $\left\{\frac{1}{\sqrt{5}}\left[\begin{matrix}1 & 1 & 0 \\ 1 & - 1 & 0 \\ 0 & 0 & 1\end{matrix}\right], \frac{1}{\sqrt{5}}\left[\begin{matrix}1 & 1 & 0 \\ j & - j & 0 \\ 0 & 0 & 1\end{matrix}\right]\right\} .$

In an example, in a case where the antenna port 0 and the antenna port 2 are coherent, and both the antenna port 0 and the antenna port 2 are non-coherent with the antenna port 1, the partially coherent codebook whose number of transmission layers is 3 (Rank=3) may include following two codewords: $\left\{\frac{1}{\sqrt{5}}\left[\begin{matrix}1 & 1 & 0 \\ 0 & 0 & 1 \\ 1 & - 1 & 0\end{matrix}\right], \frac{1}{\sqrt{5}}\left[\begin{matrix}1 & 1 & 0 \\ 0 & 0 & 1 \\ j & - j & 0\end{matrix}\right]\right\} .$

In an example, in a case where the antenna port 1 and the antenna port 2 are coherent, and both the antenna port 1 and the antenna port 2 are non-coherent with the antenna port 0, the partially coherent codebook whose number of transmission layers is 3 (Rank=3) may include following two codewords: $\left\{\frac{1}{\sqrt{5}}\left[\begin{matrix}0 & 0 & 1 \\ 1 & 1 & 0 \\ 1 & - 1 & 0\end{matrix}\right], \frac{1}{\sqrt{5}}\left[\begin{matrix}0 & 0 & 1 \\ 1 & 1 & 0 \\ j & - j & 0\end{matrix}\right]\right\} .$

In this manner, by allocating different transmission layers to different antenna port groups (the coherent antenna ports jointly transmit two transmission layers, and the non-coherent antenna port transmit one transmission layer), the effect of full power transmission can be achieved while reducing the interference between transmission layers, thereby achieving better uplink transmission performance.

Based on the introduction for the first codebook and the second codebook, and according to the method proposed in the embodiments of the present disclosure, when assuming the antenna port 0 and the antenna port 2 are coherent, the partially coherent codebook includes at least following codewords:
codeword included in a codebook corresponding to the number of transmission layers being 1 (Rank=1): $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right]\right\} ;$
codeword included in a codebook corresponding to the number of transmission layers being 2 (Rank=2): $\left\{\frac{1}{\sqrt{6}}\left[\begin{matrix}1 & 1 \\ 0 & 0 \\ 1 & - 1\end{matrix}\right], \frac{1}{\sqrt{6}}\left[\begin{matrix}1 & 1 \\ 0 & 0 \\ j & - j\end{matrix}\right], \frac{1}{\sqrt{3}}\left[\begin{matrix}1 & 0 \\ 0 & 1 \\ 1 & 0\end{matrix}\right], \frac{1}{\sqrt{3}}\left[\begin{matrix}1 & 0 \\ 0 & 1 \\ - 1 & 0\end{matrix}\right], \frac{1}{\sqrt{3}}\left[\begin{matrix}1 & 0 \\ 0 & 1 \\ j & 0\end{matrix}\right], \frac{1}{\sqrt{3}}\left[\begin{matrix}1 & 0 \\ 0 & 1 \\ - j & 0\end{matrix}\right]\right\} ;$ and
codeword included in a codebook corresponding to the number of transmission layers being 3 (Rank=3): $\left\{\frac{1}{\sqrt{5}}\left[\begin{matrix}1 & 1 & 0 \\ 0 & 0 & 1 \\ 1 & - 1 & 0\end{matrix}\right], \frac{1}{\sqrt{5}}\left[\begin{matrix}1 & 1 & 0 \\ 0 & 0 & 1 \\ j & - j & 0\end{matrix}\right]\right\} .$

Based on the introduction for the first codebook and the second codebook, and according to the method proposed in the embodiments of the present disclosure, when assuming the antenna port 0 and the antenna port 1 are coherent, the partially coherent codebook includes at least following codewords:
codewords included in a codebook corresponding to the number of transmission layers being 1 (Rank=1): $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right]\right\} ;$
codewords included in a codebook corresponding to the number of transmission layers being 2 (Rank=2): $\left\{\frac{1}{\sqrt{6}}\left[\begin{matrix}1 & 1 \\ 1 & - 1 \\ 0 & 0\end{matrix}\right], \frac{1}{\sqrt{6}}\left[\begin{matrix}1 & 1 \\ j & - j \\ 0 & 0\end{matrix}\right], \frac{1}{\sqrt{3}}\left[\begin{matrix}1 & 0 \\ 1 & 0 \\ 0 & 1\end{matrix}\right], \frac{1}{\sqrt{3}}\left[\begin{matrix}1 & 0 \\ - 1 & 0 \\ 0 & 1\end{matrix}\right], \frac{1}{\sqrt{3}}\left[\begin{matrix}1 & 0 \\ j & 0 \\ 0 & 1\end{matrix}\right], \frac{1}{\sqrt{3}}\left[\begin{matrix}1 & 0 \\ - j & 0 \\ 0 & 1\end{matrix}\right]\right\} ;$ and
codeword included in a codebook corresponding to the number of transmission layers being 3 (Rank=3): $\left\{\frac{1}{\sqrt{5}}\left[\begin{matrix}1 & 1 & 0 \\ 1 & - 1 & 0 \\ 0 & 0 & 1\end{matrix}\right], \frac{1}{\sqrt{5}}\left[\begin{matrix}1 & 1 & 0 \\ j & - j & 0 \\ 0 & 0 & 1\end{matrix}\right]\right\} .$

Based on the introduction for the first codebook and the second codebook, and according to the method proposed in the embodiments of the present disclosure, when assuming the antenna ports 1 and the antenna port 2 are coherent, the partially coherent codebook includes at least following codewords:
codeword included in a codebook corresponding to the number of transmission layers being 1 (Rank=1): $\left\{\frac{1}{\sqrt{3}}\left[\begin{matrix}0 \\ 1 \\ 1\end{matrix}\right], \frac{1}{\sqrt{3}}\left[\begin{matrix}0 \\ 1 \\ - 1\end{matrix}\right], \frac{1}{\sqrt{3}}\left[\begin{matrix}0 \\ 1 \\ j\end{matrix}\right], \frac{1}{\sqrt{3}}\left[\begin{matrix}0 \\ 1 \\ - j\end{matrix}\right]\right\} ;$
codeword included in a codebook corresponding to the number of transmission layers being 2 (Rank=2): $\left\{\frac{1}{\sqrt{6}}\left[\begin{matrix}0 & 0 \\ 1 & 1 \\ 1 & - 1\end{matrix}\right], \frac{1}{\sqrt{6}}\left[\begin{matrix}0 & 0 \\ 1 & 1 \\ j & - j\end{matrix}\right], \frac{1}{\sqrt{3}}\left[\begin{matrix}0 & 1 \\ 1 & 0 \\ 1 & 0\end{matrix}\right], \frac{1}{\sqrt{3}}\left[\begin{matrix}0 & 1 \\ 1 & 0 \\ - 1 & 0\end{matrix}\right], \frac{1}{\sqrt{3}}\left[\begin{matrix}0 & 1 \\ 1 & 0 \\ j & 0\end{matrix}\right], \frac{1}{\sqrt{3}}\left[\begin{matrix}0 & 1 \\ 1 & 0 \\ - j & 0\end{matrix}\right]\right\} ;$ and
codeword included in a codebook corresponding to the number of transmission layers being 1 (Rank=3): $\left\{\frac{1}{\sqrt{5}}\left[\begin{matrix}0 & 0 & 1 \\ 1 & 1 & 0 \\ 1 & - 1 & 0\end{matrix}\right], \frac{1}{\sqrt{5}}\left[\begin{matrix}0 & 0 & 1 \\ 1 & 1 & 0 \\ j & - j & 0\end{matrix}\right]\right\} .$

In the codewords of the embodiments of the present disclosure, swapping between different columns only affects the mapping order of transmission layers, but does not affect the performance of the codebook. Therefore, codebooks with swapped columns also fall within the protection scope of the present disclosure. For example, $\frac{1}{\sqrt{6}} \left[\begin{matrix}1 & 1 \\ 0 & 0 \\ 1 & - 1\end{matrix}\right]$ and $\frac{1}{\sqrt{6}} \left[\begin{matrix}1 & 1 \\ 0 & 0 \\ - 1 & 1\end{matrix}\right]$ are equivalent, and $\frac{1}{\sqrt{5}} \left[\begin{matrix}1 & 1 & 0 \\ 1 & - 1 & 0 \\ 0 & 0 & 1\end{matrix}\right]$ and $\frac{1}{\sqrt{5}} \left[\begin{matrix}0 & 1 & 1 \\ 0 & 1 & - 1 \\ 1 & 0 & 0\end{matrix}\right]$ are equivalent. In subsequent embodiments, swapping between different columns is also possible, which will not be repeated hereafter.

In the codewords of the embodiments of the present disclosure, the coefficient preceding the matrix is only used for power normalization, and the value of the coefficient depends on whether the coefficient is used for power normalization. This coefficient may also take other values, and the specific value of the coefficient is not limited in the embodiments of the present disclosure. For example, the coefficient may be one of following: 1, $\frac{1}{\sqrt{3}}$, 1/2, $\frac{1}{\sqrt{5}}$, and $\frac{1}{\sqrt{6}}$, etc. In subsequent embodiments, the coefficient in the codewords may also take other values, which will not be repeated hereafter.

### Embodiment II

The embodiment can support the full power transmission mode 1. The embodiment includes the following operations.

In operation 1: a terminal device reports a UE capability to a network device, to indicate that the terminal device supports an uplink full power mode 1.

In operation 2: the terminal device transmits an SRS for uplink codebook transmission.

In an example, the SRS is a 3-antenna port SRS, that is, an SRS resource of the SRS is configured with 3 antenna ports, and the usage of the SRS resource is configured as codebook.

In operation 3: the network device determines a TPMI based on the SRS and indicates the TPMI to the terminal device.

In operation 4: the terminal device receives the TPMI transmitted by the network device.

In an example, the network device indicates the TPMI along with indication information of a number of transmission layers to the terminal device through DCI or higher-layer signaling.

In operation 5: the terminal device determines a precoding matrix from a codebook corresponding to a current number of transmission layers based on the TPMI, where each codeword in the codebook is a matrix with 3 rows.

In some implementations, in a case where the codebook is a non-coherent codebook or a partially coherent codebook, and the number of transmission layers is 1,
when the network device configures the full power transmission mode 1, the codebook includes a third codeword; and
when the network device does not configure the full power transmission mode 1, the codebook does not include the third codeword,
where the third codeword is at least one of following codewords: $\frac{1}{\sqrt{3}} \left[\begin{matrix}1 \\ 1 \\ 1\end{matrix}\right] , \frac{1}{\sqrt{3}} \left[\begin{matrix}1 \\ 1 \\ j\end{matrix}\right] , \frac{1}{\sqrt{3}} \left[\begin{matrix}1 \\ 1 \\ - 1\end{matrix}\right] , \frac{1}{\sqrt{3}} \left[\begin{matrix}1 \\ 1 \\ - j\end{matrix}\right] , \frac{1}{\sqrt{3}} \left[\begin{matrix}1 \\ j \\ 1\end{matrix}\right] , \frac{1}{\sqrt{3}} \left[\begin{matrix}1 \\ j \\ j\end{matrix}\right] , \frac{1}{\sqrt{3}} \left[\begin{matrix}1 \\ j \\ - 1\end{matrix}\right] , \frac{1}{\sqrt{3}} \left[\begin{matrix}1 \\ j \\ - j\end{matrix}\right] , \frac{1}{\sqrt{3}} \left[\begin{matrix}1 \\ - 1 \\ 1\end{matrix}\right] ,$ $\frac{1}{\sqrt{3}} \left[\begin{matrix}1 \\ - 1 \\ j\end{matrix}\right] , \frac{1}{\sqrt{3}} \left[\begin{matrix}1 \\ - 1 \\ - 1\end{matrix}\right] , \frac{1}{\sqrt{3}} \left[\begin{matrix}1 \\ - 1 \\ - j\end{matrix}\right] , \frac{1}{\sqrt{3}} \left[\begin{matrix}1 \\ - j \\ 1\end{matrix}\right] , \frac{1}{\sqrt{3}} \left[\begin{matrix}1 \\ - j \\ j\end{matrix}\right] , \frac{1}{\sqrt{3}} \left[\begin{matrix}1 \\ - j \\ - 1\end{matrix}\right] , or \frac{1}{\sqrt{3}} \left[\begin{matrix}1 \\ - j \\ - j\end{matrix}\right] .$

In a typical example, the third codeword is: $\frac{1}{\sqrt{3}} \left[\begin{matrix}1 \\ 1 \\ j\end{matrix}\right] or \frac{1}{\sqrt{3}} \left[\begin{matrix}1 \\ 1 \\ 1\end{matrix}\right] .$

In some implementations, in a case where the codebook is a non-coherent codebook and the number of transmission layers is 2,
when the network device configures the full power transmission mode 1, the codebook includes a fourth codeword; and
when the network device does not configure the full power transmission mode 1, the codebook does not include the fourth codeword,
where the fourth codeword is at least one of following codewords: $\frac{1}{\sqrt{3}} \left[\begin{matrix}1 & 0 \\ 1 & 0 \\ 0 & 1\end{matrix}\right] , \frac{1}{\sqrt{3}} \left[\begin{matrix}1 & 0 \\ - 1 & 0 \\ 0 & 1\end{matrix}\right] , \frac{1}{\sqrt{3}} \left[\begin{matrix}1 & 0 \\ j & 0 \\ 0 & 1\end{matrix}\right] , \frac{1}{\sqrt{3}} \left[\begin{matrix}1 & 0 \\ - j & 0 \\ 0 & 1\end{matrix}\right] , \frac{1}{\sqrt{3}} \left[\begin{matrix}1 & 0 \\ 0 & 1 \\ 1 & 0\end{matrix}\right] , \frac{1}{\sqrt{3}} \left[\begin{matrix}1 & 0 \\ 0 & 1 \\ - 1 & 0\end{matrix}\right] ,$ $\frac{1}{\sqrt{3}} \left[\begin{matrix}1 & 0 \\ 0 & 1 \\ j & 0\end{matrix}\right] , \frac{1}{\sqrt{3}} \left[\begin{matrix}1 & 0 \\ 0 & 1 \\ - j & 0\end{matrix}\right] , \frac{1}{\sqrt{3}} \left[\begin{matrix}0 & 1 \\ 1 & 0 \\ 1 & 0\end{matrix}\right] , \frac{1}{\sqrt{3}} \left[\begin{matrix}0 & 1 \\ 1 & 0 \\ - 1 & 0\end{matrix}\right] , \frac{1}{\sqrt{3}} \left[\begin{matrix}0 & 1 \\ 1 & 0 \\ j & 0\end{matrix}\right] , or \frac{1}{\sqrt{3}} \left[\begin{matrix}0 & 1 \\ 1 & 0 \\ - j & 0\end{matrix}\right] .$

In a typical example, the fourth codeword is $\frac{1}{\sqrt{3}} \left[\begin{matrix}1 & 0 \\ 1 & 0 \\ 0 & 1\end{matrix}\right]$ or $\frac{1}{\sqrt{3}} \left[\begin{matrix}1 & 0 \\ 0 & 1 \\ 1 & 0\end{matrix}\right]$.

In operation 6: the terminal device performs precoding on the data using the precoding matrix and transmits precoded data to the network device.

In the embodiment, among the third codeword and the fourth codeword, all 3 antenna ports can be used for uplink signal transmission (even if the 3 antenna ports are not coherent), thus taking full advantage of all 3 antenna ports to achieve full power transmission and improve the uplink coverage for the terminal device with 3 antenna ports.

### Embodiment III

The embodiment can support the full power transmission mode 2. The embodiment includes the following operations.

In operation 1: a terminal device reports a UE capability to a network device, to indicate that the terminal device is capable of supporting a precoding matrix set for a full power transmission or a TPMI set for a full power transmission.

In operation 2: the terminal device transmits an SRS for uplink codebook transmission. In an example, the SRS is a 3-antenna port SRS, that is, an SRS resource of the SRS is configured with 3 antenna ports, and the usage of the SRS resource is configured as codebook.

In operation 3: the network device determines a TPMI based on the SRS and indicates the TPMI to the terminal device. In an example, the network device may indicate, by indicating a precoding matrix capable of supporting the full power transmission or a TPMI supporting the full power transmission reported by the terminal device, the terminal device to perform an uplink transmission at full power.

In operation 4: the terminal device receives the TPMI transmitted by the network device. In an example, the TPMI is indicated to the terminal device along with indication information of a number of transmission layers via DCI or higher-layer signaling.

In operation 5: the terminal device determines a precoding matrix from the codebook corresponding to a current number of transmission layers based on the TPMI, where each codeword in the codebook is a matrix with 3 rows. In a case where the network device indicates a precoding matrix in the precoding matrix set supporting the full power transmission reported by the terminal device or a TPMI in the TPMI set supporting the full power transmission reported by the terminal device, the terminal device needs to perform the uplink transmission at the full power. Otherwise, in a case where only a part of antenna ports are currently used for uplink transmission, the terminal device may not perform the uplink transmission at the full power.

In operation 6: the terminal device performs precoding on data using the precoding matrix and transmits precoded data.

Regarding the operation 1, a TPMI in the TPMI set indicated by the UE capability reported by the terminal device corresponds to a precoding matrix in a predefined codebook. Both a precoding matrix in the precoding matrix set and the precoding matrix corresponding to the TPMI set include 3 rows.

In the embodiment, the terminal device indicating a TPMI set and the terminal device indicating a precoding matrix set are essentially equivalent. The former indicates an index, and the latter indicates a matrix, with only a formal difference between the two.

In some implementations, the predefined codebook is a 3-antenna port codebook agreed upon by the terminal device and the network device, which may be a fully coherent codebook, a partially coherent codebook, or a non-coherent codebook.

For different terminal devices, the maximum transmit power supported by the power amplifier (PA) on each radio frequency chain is different. Therefore, the precoding matrix/TPMI capable of supporting the full power transmission is also different and needs to be reported to the network device through the UE capability. In other words, the different UE capabilities reported by terminal devices reflect different PA capabilities.

Regarding the operation 1, the method in which the terminal device reports the UE capability includes at least the following schemes.

The first scheme: the terminal device reports the UE capability to the network device via a bitmap.

The second scheme: the terminal device indicates a precoding matrix set capable of supporting the full power transmission or a TPMI set capable of supporting the full power transmission, from multiple predefined precoding matrix sets or multiple predefined TPMI sets.

Regarding the first scheme:
the terminal device indicates the precoding matrix set capable of supporting the full power transmission or the TPMI set capable of supporting the full power transmission via the bitmap. Here, each bit in the bitmap may correspond to a precoding matrix/TPMI or a group of precoding matrices/TPMIs.

In an implementation, in a case where the terminal device only supports the non-coherent codebook, that is, three antenna ports of the terminal device are non-coherent antenna ports, or in other words, the terminal device is a 3-port non-coherent terminal, the bitmap may be 2 bits or 6 bits. Specifically, one of following manners may be adopted.
(1) Manner 1: in a case where the bitmap includes 2 bits,
   one bit indicates whether $\frac{1}{\sqrt{3}} \left[\begin{matrix}1 \\ 0 \\ 0\end{matrix}\right]$ supports the full power transmission, or indicates whether a TPMI corresponding to $\frac{1}{\sqrt{3}} \left[\begin{matrix}1 \\ 0 \\ 0\end{matrix}\right]$ supports the full power transmission. For example, a case where a value of the bit is 1 indicates that $\frac{1}{\sqrt{3}} \left[\begin{matrix}1 \\ 0 \\ 0\end{matrix}\right]$ (or the TPMI corresponding to $\frac{1}{\sqrt{3}} \left[\begin{matrix}1 \\ 0 \\ 0\end{matrix}\right]$) supports the full power transmission; and a case where the value of the bit is 0 indicates that $\frac{1}{\sqrt{3}} \left[\begin{matrix}1 \\ 0 \\ 0\end{matrix}\right]$ (or the TPMI corresponding to $\frac{1}{\sqrt{3}} \left[\begin{matrix}1 \\ 0 \\ 0\end{matrix}\right]$) does not support the full power transmission. For another example, the case where the value of the bit is 0 indicates supporting; and the case where the value of the bit is 1 indicates not supporting.

The other bit indicates whether $\frac{1}{\sqrt{3}} \left[\begin{matrix}1 & 0 \\ 0 & 1 \\ 0 & 0\end{matrix}\right]$ supports the full power transmission, or indicates whether a TPMI corresponding to $\frac{1}{\sqrt{3}} \left[\begin{matrix}1 & 0 \\ 0 & 1 \\ 0 & 0\end{matrix}\right]$ supports the full power transmission. For example, a case where a value of the bit is 1 indicates that $\frac{1}{\sqrt{3}} \left[\begin{matrix}1 & 0 \\ 0 & 1 \\ 0 & 0\end{matrix}\right]$ (or the TPMI corresponding to $\frac{1}{\sqrt{3}} \left[\begin{matrix}1 & 0 \\ 0 & 1 \\ 0 & 0\end{matrix}\right]$) supports the full power transmission; and a case where the value of the bit is 0 indicates that $\frac{1}{\sqrt{3}} \left[\begin{matrix}1 & 0 \\ 0 & 1 \\ 0 & 0\end{matrix}\right]$ (or the TPMI corresponding to $\frac{1}{\sqrt{3}} \left[\begin{matrix}1 & 0 \\ 0 & 1 \\ 0 & 0\end{matrix}\right]$) does not support the full power transmission. For another example, the case where the value of the bit is 0 indicates supporting; and the case where the value of the bit is 1 indicates not supporting. Here, $\frac{1}{\sqrt{3}} \left[\begin{matrix}1 & 0 \\ 0 & 1 \\ 0 & 0\end{matrix}\right]$ may be replaced with $\frac{1}{\sqrt{3}} \left[\begin{matrix}1 & 0 \\ 0 & 0 \\ 0 & 1\end{matrix}\right]$.

In other words, in the case where the bitmap includes 2 bits, one bit indicates whether using one antenna port (i.e., one PA) supports the full power transmission, that is, whether the terminal device has an RF chain that supports the full power transmission; and the other bit indicates whether using two antenna ports (i.e., two PAs) supports the full power transmission, that is, whether the terminal device has two RF chains that support the full power transmission. This manner may be used in scenarios where one or two antenna ports of the terminal device support the full power transmission.

Based on this method, the terminal device only needs minimal signaling overhead to report how many antenna ports (i.e., PAs) being capable of supporting the full power transmission, so that the network device can schedule the corresponding number of antenna ports for uplink transmission, thereby improving the performance of uplink transmission.

(2) Manner 2: in a case where the bitmap includes 2 bits,
one bit indicates whether $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$ or TPMIs corresponding to the $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$ support the full power transmission. For example, a case where a value where the bit is 1 indicates that $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$ (or TPMIs corresponding to the $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$) support the full power transmission; and a case where the value of the bit is 0 indicates that $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$ (or TPMI, corresponding to the $\left\{\frac{1}{\sqrt{3}}\left[\begin{matrix}1 \\ 0 \\ 0\end{matrix}\right],\frac{1}{\sqrt{3}}\left[\begin{matrix}0 \\ 1 \\ 0\end{matrix}\right],\frac{1}{\sqrt{3}}\left[\begin{matrix}0 \\ 0 \\ 1\end{matrix}\right]\right\}$) do not support the full power transmission. For another example, a case where the value of the bit is 0 indicates supporting; and a case where the value of the bit is1 indicates not supporting.

The other bit indicates whether $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or TPMIs corresponding to the $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ support the full power transmission. For example, a case where a value of the bit is 1 indicates that $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ (or TPMIs corresponding to the $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ) support the full power transmission; and a case where the value of the bit is 0 indicates that $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ (or TPMIs corresponding to the $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ) do not support the full power transmission. For yet another example, a case where the value of the bit is 0 indicates supporting; and a case where the value of the bit is 1 indicates not supporting.

In other words, one bit indicates whether using any one antenna port (i.e., any one PA) supports the full power transmission, that is, whether any one RF chain of the terminal device supports the full power transmission; and the other bit indicates whether using any two antenna ports (i.e., any two PAs) support the full power transmission, that is, whether any two RF chains of the terminal device support the full power transmission. This manner may be applied to scenarios where any one or two antenna ports of the terminal device support the full power transmission.

(3) Manner 3: in a case where the bitmap includes 6 bits, the 6 bits respectively indicate whether $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right] , \frac{1}{\sqrt{3}} \left[\begin{matrix}0 \\ 0 \\ 1\end{matrix}\right] , \frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$ , and $\frac{1}{\sqrt{3}} \left[\begin{matrix}0 & 0 \\ 1 & 0 \\ 0 & 1\end{matrix}\right]$ support the full power transmission, or indicate whether TPMIs corresponding to $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right] , \frac{1}{\sqrt{3}} \left[\begin{matrix}0 \\ 0 \\ 1\end{matrix}\right] , \frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$, and $\frac{1}{\sqrt{3}} \left[\begin{matrix}0 & 0 \\ 1 & 0 \\ 0 & 1\end{matrix}\right]$ support the full power transmission.

For example, a case where a value of a bit is 1 indicates that a precoding matrix indicated by the bit is capable of supporting the full power transmission, or that a TPMI corresponding to the precoding matrix indicated by the bit is capable of supporting the full power transmission; and a case where a value of a bit is 0 indicates that a precoding matrix indicated by the bit does not support the full power transmission, or that a TPMI corresponding to the precoding matrix indicated by the bit does not support the full power transmission. For another example, a case where the value of the bit is 0 indicates supporting; and a case where the value of the bit is 1 indicates not supporting.

In other words, each bit respectively indicates whether using one or two antenna ports supports the full power transmission.

Based on this manner, the terminal device can further indicate which one or two antenna ports (PAs) are capable of supporting the full power transmission, thereby enabling the terminal device to adopt more flexible PA architecture and improving the flexibility of the network device in indicating the TPMI. Meanwhile, the network device can schedule the corresponding antenna ports for uplink transmission, enhancing the performance of uplink transmission.

In an implementation, in a case where the terminal device supports the partially coherent codebook, that is, three antenna ports of the terminal device are partially coherent antenna ports (where two antenna ports are coherent, which are not coherent with the another antenna port), or in other words, the terminal device is a 3-port partially coherent terminal, the bitmap may be 2 bits or 6 bits. Specifically, one of following manners may be adopted.
(1) Manner 1: in a case where the bitmap includes 2 bits,
   one bit indicates whether $\frac{1}{\sqrt{3}} \left[\begin{matrix}0 \\ 1 \\ 0\end{matrix}\right]$ supports the full power transmission, or indicates whether a TPMI corresponding to $\frac{1}{\sqrt{3}} \left[\begin{matrix}0 \\ 1 \\ 0\end{matrix}\right]$ supports the full power transmission, or indicates whether $\frac{1}{\sqrt{3}} \left[\begin{matrix}0 \\ 0 \\ 1\end{matrix}\right]$ supports the full power transmission, or indicates whether a TPMI corresponding to $\frac{1}{\sqrt{3}} \left[\begin{matrix}0 \\ 0 \\ 1\end{matrix}\right]$ supports the full power transmission. For example, a case where a value of the bit is 1 indicates that the precoding matrix or the TPMI corresponding to the precoding is capable of supporting the full power transmission; and a case where the value of the bit is 0 indicates that the precoding matrix or the TPMI corresponding to the precoding does not support the full power transmission. For another example, the case where the value of the bit is 0 indicates that the precoding matrix or the TPMI corresponding to the precoding is capable of supporting the full power transmission, and the case where the value of the bit is 1 indicates that the precoding matrix or the TPMI corresponding to the precoding does not support the full power transmission.

The other bit indicates whether $\frac{1}{\sqrt{3}} \left[\begin{matrix}1 \\ 0 \\ x\end{matrix}\right]$ supports the full power transmission, or indicates whether a TPMI corresponding to $\frac{1}{\sqrt{3}} \left[\begin{matrix}1 \\ 0 \\ x\end{matrix}\right]$ supports the full power transmission, or indicates whether $\frac{1}{\sqrt{3}} \left[\begin{matrix}1 \\ x \\ 0\end{matrix}\right]$ supports the full power transmission, or indicates whether a TPMI corresponding to $\frac{1}{\sqrt{3}} \left[\begin{matrix}1 \\ x \\ 0\end{matrix}\right]$ supports the full power transmission. For example, a case where a value of the bit is 1 indicates that the precoding matrix or the TPMI corresponding to the precoding is capable of supporting the full power transmission; and a case where the value of the bit is 0 indicates that the precoding matrix or the TPMI corresponding to the precoding does not support the full power transmission. For another example, the case where the value of the bit is 0 indicates that the precoding matrix or the TPMI corresponding to the precoding is capable of supporting the full power transmission; and the case where the value of the bit is 1 indicates that the precoding matrix or the TPMI corresponding to the precoding does not support the full power transmission.

Here, x is a non-zero QPSK element, i.e., x = {1, -1, j, -j}. For example, the $\frac{1}{\sqrt{3}} \left[\begin{matrix}1 \\ 0 \\ x\end{matrix}\right]$ actually includes four precoding matrices, that is, $\frac{1}{\sqrt{3}} \left[\begin{matrix}1 \\ 0 \\ 1\end{matrix}\right] , \frac{1}{\sqrt{3}} \left[\begin{matrix}1 \\ 0 \\ - 1\end{matrix}\right] , \frac{1}{\sqrt{3}} \left[\begin{matrix}1 \\ 0 \\ j\end{matrix}\right]$ and $\frac{1}{\sqrt{3}} \left[\begin{matrix}1 \\ 0 \\ - j\end{matrix}\right]$, which correspond to four different values of x.

In an example, in a case where an antenna port 0 and an antenna port 2 are coherent, and the antenna port 0 and the antenna port 2 are non-coherent with an antenna port 1, one bit indicates whether $\frac{1}{\sqrt{3}} \left[\begin{matrix}0 \\ 1 \\ 0\end{matrix}\right]$ or a TPMI corresponding to $\frac{1}{\sqrt{3}} \left[\begin{matrix}0 \\ 1 \\ 0\end{matrix}\right]$ supports the full power transmission, and the other bit indicates whether $\frac{1}{\sqrt{3}} \left[\begin{matrix}1 \\ 0 \\ x\end{matrix}\right]$ or a TPMI corresponding to $\frac{1}{\sqrt{3}} \left[\begin{matrix}1 \\ 0 \\ x\end{matrix}\right]$ support the full power transmission.

In an example, in a case where the antenna port 0 and the antenna port 1 are coherent, and the antenna port 0 and the antenna port 1 are non-coherent with the antenna port 2, one bit indicates whether $\frac{1}{\sqrt{3}} \left[\begin{matrix}0 \\ 0 \\ 1\end{matrix}\right]$ or a TPMI corresponding to $\frac{1}{\sqrt{3}} \left[\begin{matrix}0 \\ 0 \\ 1\end{matrix}\right]$ support the full power transmission, and the other bit indicates whether $\frac{1}{\sqrt{3}} \left[\begin{matrix}1 \\ x \\ 0\end{matrix}\right]$ or a TPMI corresponding to $\frac{1}{\sqrt{3}} \left[\begin{matrix}1 \\ x \\ 0\end{matrix}\right]$ support the full power transmission.

In this manner, the antenna ports are actually divided into two antenna port groups. The first group includes two coherent antenna ports, and the second group includes one antenna port. Two bits in the bitmap respectively indicate whether the two antenna port groups support the full power transmission.

(2) Manner 2: in a case where the bitmap includes 2 bits,
one bit indicates whether $\frac{1}{\sqrt{3}} \left[\begin{matrix}0 \\ 1 \\ 0\end{matrix}\right]$ supports the full power transmission, or indicates whether a TPMI corresponding to $\frac{1}{\sqrt{3}} \left[\begin{matrix}0 \\ 1 \\ 0\end{matrix}\right]$ supports the full power transmission, or indicates whether $\frac{1}{\sqrt{3}} \left[\begin{matrix}0 \\ 0 \\ 1\end{matrix}\right]$ supports the full power transmission, or indicates whether a TPMI corresponding to $\frac{1}{\sqrt{3}} \left[\begin{matrix}0 \\ 0 \\ 1\end{matrix}\right]$ supports the full power transmission. For example, a case where a value of the bit is 1 indicates that the precoding matrix or the TPMI corresponding to the precoding is capable of supporting the full power transmission; and a case where the value of the bit is 0 indicates that the precoding matrix or the TPMI corresponding to the precoding does not support the full power transmission. For another example, the case where the value of the bit is 0 indicates that the precoding matrix or the TPMI corresponding to the precoding is capable of supporting the full power transmission; and the case where the value of the bit is 1 indicates that the precoding matrix or the TPMI corresponding to the precoding does not support the full power transmission.

The other bit indicates whether $\left\{\frac{1}{\sqrt{3}}\left[\begin{matrix}1 \\ 0 \\ x\end{matrix}\right], \frac{1}{\sqrt{3}}\left[\begin{matrix}1 & 1 \\ 0 & 0 \\ 1 & - 1\end{matrix}\right], \frac{1}{\sqrt{3}}\left[\begin{matrix}1 & 1 \\ 0 & 0 \\ j & - j\end{matrix}\right]\right\}$ support the full power transmission, or indicates whether TPMIs corresponding to $\left\{\frac{1}{\sqrt{3}}\left[\begin{matrix}1 \\ 0 \\ x\end{matrix}\right], \frac{1}{\sqrt{3}}\left[\begin{matrix}1 & 1 \\ 0 & 0 \\ 1 & - 1\end{matrix}\right], \frac{1}{\sqrt{3}}\left[\begin{matrix}1 & 1 \\ 0 & 0 \\ j & - j\end{matrix}\right]\right\}$ support the full power transmission, or indicates whether $\left\{\frac{1}{\sqrt{3}}\left[\begin{matrix}1 \\ x \\ 0\end{matrix}\right], \frac{1}{\sqrt{3}}\left[\begin{matrix}1 & 1 \\ 1 & - 1 \\ 0 & 0\end{matrix}\right], \frac{1}{\sqrt{3}}\left[\begin{matrix}1 & 1 \\ j & - j \\ 0 & 0\end{matrix}\right]\right\}$ support the full power transmission, or indicates whether TPMIs corresponding to $\left\{\frac{1}{\sqrt{3}}\left[\begin{matrix}1 \\ x \\ 0\end{matrix}\right], \frac{1}{\sqrt{3}}\left[\begin{matrix}1 & 1 \\ 1 & - 1 \\ 0 & 0\end{matrix}\right], \frac{1}{\sqrt{3}}\left[\begin{matrix}1 & 1 \\ j & - j \\ 0 & 0\end{matrix}\right]\right\}$ support the full power transmission. For example, a case where a value of the bit is 1 indicates that the indicated precoding matrices or the TPMIs corresponding to the precoding are capable of supporting the full power transmission; and a case where the value of the bit is 0 indicates that the indicated precoding matrices or the TPMIs corresponding to the precoding do not support the full power transmission. For another example, the case where the value of the bit is 0 indicates that the indicated precoding matrices or the TPMIs corresponding to the precoding are capable of supporting the full power transmission; and the case where the value of the bit is 1 indicates that the indicated precoding matrices or the TPMIs corresponding to the precoding do not support the full power transmission.

Here, x is a non-zero QPSK element, i.e., x = {1, -1, j, -j}. In this case, $\frac{1}{\sqrt{3}} \left[\begin{matrix}1 \\ 0 \\ x\end{matrix}\right]$ and $\frac{1}{\sqrt{3}} \left[\begin{matrix}1 \\ x \\ 0\end{matrix}\right]$ actually respectively include four precoding matrices which correspond to four different values of x.

In an example, in a case where the antenna port 0 and the antenna port 2 are coherent, and the antenna port 0 and the antenna port 2 are non-coherent with the antenna port 1, one bit indicates whether $\frac{1}{\sqrt{3}} \left[\begin{matrix}0 \\ 1 \\ 0\end{matrix}\right]$ or a TPMI corresponding to $\frac{1}{\sqrt{3}} \left[\begin{matrix}0 \\ 1 \\ 0\end{matrix}\right]$ supports the full power transmission, and the other bit indicates whether $\left\{\frac{1}{\sqrt{3}}\left[\begin{matrix}1 \\ 0 \\ x\end{matrix}\right], \frac{1}{\sqrt{3}}\left[\begin{matrix}1 & 1 \\ 0 & 0 \\ 1 & - 1\end{matrix}\right], \frac{1}{\sqrt{3}}\left[\begin{matrix}1 & 1 \\ 0 & 0 \\ j & - j\end{matrix}\right]\right\}$ or TPMIs corresponding to $\left\{\frac{1}{\sqrt{3}}\left[\begin{matrix}1 \\ 0 \\ x\end{matrix}\right], \frac{1}{\sqrt{3}}\left[\begin{matrix}1 & 1 \\ 0 & 0 \\ 1 & - 1\end{matrix}\right], \frac{1}{\sqrt{3}}\left[\begin{matrix}1 & 1 \\ 0 & 0 \\ j & - j\end{matrix}\right]\right\}$ support the full power transmission.

In an example, in a case where the antenna port 0 and the antenna port 1 are coherent, and the antenna port 0 and the antenna port 1 are non-coherent with the antenna port 2, one bit indicates whether $\frac{1}{\sqrt{3}} \left[\begin{matrix}0 \\ 0 \\ 1\end{matrix}\right]$ or a TPMI corresponding to $\frac{1}{\sqrt{3}} \left[\begin{matrix}0 \\ 0 \\ 1\end{matrix}\right]$ supports the full power transmission, and other bit indicates whether $\left\{\frac{1}{\sqrt{3}}\left[\begin{matrix}1 \\ x \\ 0\end{matrix}\right], \frac{1}{\sqrt{3}}\left[\begin{matrix}1 & 1 \\ 1 & - 1 \\ 0 & 0\end{matrix}\right], \frac{1}{\sqrt{3}}\left[\begin{matrix}1 & 1 \\ j & - j \\ 0 & 0\end{matrix}\right]\right\}$ or TPMIs corresponding to $\left\{\frac{1}{\sqrt{3}}\left[\begin{matrix}1 \\ x \\ 0\end{matrix}\right], \frac{1}{\sqrt{3}}\left[\begin{matrix}1 & 1 \\ 1 & - 1 \\ 0 & 0\end{matrix}\right], \frac{1}{\sqrt{3}}\left[\begin{matrix}1 & 1 \\ j & - j \\ 0 & 0\end{matrix}\right]\right\}$ support the full power.

In this manner, the antenna ports are actually divided into two antenna port groups. The first group includes two coherent antenna ports, and the second group includes one antenna port. Two bits in the bitmap respectively indicate whether the two antenna port groups support the full power transmission, and content indicated by the two bits may also be interchanged.

(3) Manner 3: in a case where the bitmap includes 2 bits,
one bit indicates whether $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right]\right\}$ support the full power transmission, or indicates whether TPMIs corresponding to $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right]\right\}$ support the full power transmission. For example, a case where a value of the bit is 1 indicates that the precoding matrices or the TPMIs corresponding to the precoding are capable of supporting the full power transmission; and a case where the value of the bit is 0 indicates that the precoding matrices or the TPMIs corresponding to the precoding do not support the full power transmission. For another example, the case where the value of the bit is 0 indicates that the precoding matrices or the TPMIs corresponding to the precoding are capable of supporting the full power transmission; and the case where the value of the bit is 1 indicates that the precoding matrices or the TPMIs corresponding to the precoding do not support the full power transmission.

The other bit indicates whether $\left\{\frac{1}{\sqrt{3}}\left[\begin{matrix}1 & 0 \\ 0 & x \\ 0 & 0\end{matrix}\right], \frac{1}{\sqrt{3}}\left[\begin{matrix}1 & 0 \\ 0 & 0 \\ 0 & x\end{matrix}\right], \frac{1}{\sqrt{3}}\left[\begin{matrix}0 & 0 \\ 1 & 0 \\ 0 & x\end{matrix}\right]\right\}$ support the full power transmission, or indicates whether TPMIs corresponding to $\left\{\frac{1}{\sqrt{3}}\left[\begin{matrix}1 & 0 \\ 0 & x \\ 0 & 0\end{matrix}\right], \frac{1}{\sqrt{3}}\left[\begin{matrix}1 & 0 \\ 0 & 0 \\ 0 & x\end{matrix}\right], \frac{1}{\sqrt{3}}\left[\begin{matrix}0 & 0 \\ 1 & 0 \\ 0 & x\end{matrix}\right]\right\}$ support the full power transmission. For example, a case where a value of the bit is 1 indicates that the precoding matrices or the TPMIs corresponding to the precoding are capable of supporting the full power transmission; and a case where the value of the bit is 0 indicates that the precoding matrices or the TPMIs corresponding to the precoding do not support the full power transmission. For another example, the case where the value of the bit is 0 indicates that the precoding matrices or the TPMIs corresponding to the precoding are capable of supporting the full power transmission; and the case where the value of the bit is 1 indicates that the precoding matrices or the TPMIs corresponding to the precoding do not support the full power transmission.

In other words, one bit indicates whether using any one antenna port (i.e., any one PA) supports the full power transmission, that is, whether any one RF chain of the terminal device supports the full power transmission; and the other bit indicates whether using any two antenna ports (i.e., any two PAs) both supports the full power transmission, that is, whether any two RF chains of the terminal device both support the full power transmission.

(4) Manner 4: in a case where the bitmap includes 4 bits, the 4 bits respectively indicate following content:
a first bit indicates whether a TPMI corresponding to $\frac{1}{\sqrt{3}} \left[\begin{matrix}1 \\ 0 \\ 0\end{matrix}\right]$ or $\frac{1}{\sqrt{3}} \left[\begin{matrix}1 \\ 0 \\ 0\end{matrix}\right]$ supports the full power transmission;
a second bit indicates whether a TPMI corresponding to $\frac{1}{\sqrt{3}} \left[\begin{matrix}0 \\ 1 \\ 0\end{matrix}\right]$ or $\frac{1}{\sqrt{3}} \left[\begin{matrix}0 \\ 1 \\ 0\end{matrix}\right]$ supports the full power transmission;
a third bit indicates whether a TPMI corresponding to $\frac{1}{\sqrt{3}} \left[\begin{matrix}0 \\ 0 \\ 1\end{matrix}\right]$ or $\frac{1}{\sqrt{3}} \left[\begin{matrix}0 \\ 0 \\ 1\end{matrix}\right]$ supports the full power transmission; and
a fourth bit indicates whether $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission; and this case may be applicable to the situation where the antenna port 0 and the antenna port 1 are coherent, and the antenna port 0 and the antenna port 1 are non-coherent with the antenna port 2. Alternatively, the fourth bit indicates whether $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$, and $\frac{1}{\sqrt{3}} \left[\begin{matrix}1 & 1 \\ 0 & 0 \\ j & - j\end{matrix}\right]$ support the full power transmission, or whether TPMIs corresponding to $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$, and $\frac{1}{\sqrt{3}} \left[\begin{matrix}1 & 1 \\ 0 & 0 \\ j & - j\end{matrix}\right]$ support the full power transmission; and this case may be applicable to the situation where the antenna port 0 and the antenna port 2 are coherent, and the antenna port 0 and the antenna port 2 are non-coherent with the antenna port 1.

In this method, the content indicated by different bits may be interchanged, which does not affect implementation of the corresponding functionality, only resulting in the difference in signaling. For example, the content indicated by the first bit and the content indicated by the second bit may be interchanged.

The first scheme in which the terminal device reports the UE capability (i.e., the scheme adopting the bitmap for reporting) is introduced above.

The second scheme in which the terminal device reports the UE capability (that is, the terminal device indicates a precoding matrix set capable of supporting the full power transmission or a TPMI set capable of supporting the full power transmission, from multiple predefined precoding matrix sets or multiple predefined TPMI sets) is introduced below.
(1) In an implementation, each of the multiple predefined precoding matrix sets or each of the multiple predefined TPMI sets corresponds to a respective precoding matrix set that includes a first precoding matrix set, a second precoding matrix set, and a third precoding matrix set; or includes a first precoding matrix set, a second precoding matrix set, and a fourth precoding matrix set; or includes a first precoding matrix set, a second precoding matrix set, a third precoding matrix set, and a fourth precoding matrix set,
   where the first precoding matrix set is $\left\{\frac{1}{\sqrt{3}}\left[\begin{matrix}1 \\ 0 \\ 0\end{matrix}\right]\right\}$;
   the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ (or is $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ );
   the third precoding matrix set is $\left\{\frac{1}{\sqrt{3}}\left[\begin{matrix}1 & 0 \\ 0 & 1 \\ 0 & 0\end{matrix}\right]\right\}$ (or is $\left\{\frac{1}{\sqrt{3}}\left[\begin{matrix}1 & 0 \\ 0 & 0 \\ 0 & 1\end{matrix}\right]\right\}$); and
   the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

Here, the first precoding matrix set may be referred to as G0, corresponding to a case where a respective maximum transmit power supported by each PA of the terminal device is {23 dBm, y dBm, z dBm}, and antenna ports are non-coherent;
the second precoding matrix set may be referred to as G1, corresponding to a case where the respective maximum transmit power supported by each PA of the terminal device is {23 dBm, 23 dBm, y dBm} or {23 dBm, y dBm, 23 dBm}, and antenna ports are non-coherent;
the third precoding matrix set may be referred to as G2, corresponding to a case where the respective maximum transmit power supported by each PA of the terminal device is {20 dBm, 20 dBm, y dBm} or {20 dBm, y dBm, 20 dBm}, and antenna ports are non-coherent; and
the fourth precoding matrix set may be referred to as G3, corresponding to a case where the respective maximum transmit power supported by each PA of the terminal device is {20 dBm, 20 dBm, 20 dBm}, and antenna ports are non-coherent,
where y and z are less than 20, for example, x and y may be 17.

This method may be applied to the case where the terminal device only supports the non-coherent codebook (referred to as a non-coherent UE), or the case where the terminal device supports the partially coherent codebook (referred to as a partially coherent UE), or the case where the terminal device supports the fully coherent codebook (referred to as a fully coherent UE).

(2) In an implementation, in a case where the terminal device supports the partially coherent codebook or the fully coherent codebook, each of the multiple predefined precoding matrix sets or each of the multiple predefined TPMI sets corresponds to a respective precoding matrix set that includes a first precoding matrix set, a second precoding matrix set, a fifth precoding matrix set, and a sixth precoding matrix set; and further includes at least one of a third precoding matrix set or a fourth precoding matrix set,
where the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ (or is $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ );
the third precoding matrix set is $\left\{\frac{1}{\sqrt{3}}\left[\begin{matrix}1 & 0 \\ 0 & 1 \\ 0 & 0\end{matrix}\right]\right\}$ (or is $\left\{\frac{1}{\sqrt{3}}\left[\begin{matrix}1 & 0 \\ 0 & 0 \\ 0 & 1\end{matrix}\right]\right\}$);
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$;
the fifth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right]\right\}$; and
the sixth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ .

Here, the first precoding matrix set may be referred to as G0, corresponding to the case where the respective maximum transmit power supported by each PA of the terminal device is {23 dBm, y dBm, z dBm}, and antenna ports are non-coherent;
the second precoding matrix set may be referred to as G1, corresponding to the case where the respective maximum transmit power supported by each PA of the terminal device is {23 dBm, 23 dBm, y dBm} or {23 dBm, y dBm, 23 dBm}, and antenna ports are non-coherent;
the third precoding matrix set may be referred to as G2, corresponding to the case where the respective maximum transmit power supported by each PA of the terminal device is {20 dBm, 20 dBm, y dBm} or {20 dBm, y dBm, 20 dBm}, and antenna ports are non-coherent;
the fourth precoding matrix set may be referred to as G3, corresponding to the case where the respective maximum transmit power supported by each PA of the terminal device is {20 dBm, 20 dBm, 20 dBm}, and antenna ports are non-coherent;
the fifth precoding matrix set may be referred to as G4, corresponding to the case where the respective maximum transmit power supported by each PA of the terminal device is {20 dBm, 20 dBm, y dBm} or {20 dBm, y dBm, 20 dBm}, and antenna ports are partially coherent; and
the sixth precoding matrix set may be referred to as G5, corresponding to the case where the respective maximum transmit power supported by each PA of the terminal device is {20 dBm, 20 dBm, 20 dBm}, and antenna ports are partially coherent,
where y and z are less than 20, for example, x and y are 17.

This method may be applied the case where the terminal device supports the partially coherent codebook (referred to as the partially coherent UE) or the case where the terminal device supports the fully coherent codebook (referred to as the fully coherent UE).

(3) In an implementation, on the basis of the second implementation (2), in the case where the terminal device supports the partially coherent codebook or the fully coherent codebook, each of the multiple predefined precoding matrix sets or each of the multiple predefined TPMI sets corresponds to the respective precoding matrix set that further includes a seventh precoding matrix set and/or an eighth precoding matrix set. That is, each of the multiple predefined precoding matrix sets or each of the multiple predefined TPMI sets corresponds to the respective precoding matrix set that includes the first precoding matrix set, the second precoding matrix set, the fifth precoding matrix set, and the sixth precoding matrix set; and further include at least one of the third precoding matrix set or the fourth precoding matrix set; and further include at least one of the seventh precoding matrix set or the eighth precoding matrix set;
where the seventh precoding matrix set is $\left\{\frac{1}{\sqrt{3}}\left[\begin{matrix}0 \\ 1 \\ 0\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}0 \\ 0 \\ 1\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ; and
the eighth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right],\right. \frac{1}{\sqrt{3}} \left[\begin{matrix}1 \\ - j \\ 0\end{matrix}\right] ,$ $\left.\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right]\right.$ $\left.\frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

Here, the seventh precoding matrix set may be referred to as G6, corresponding to a case where the respective maximum transmit power supported by each PA of the terminal device is {20 dBm, 23 dBm, 20 dBm} or {20 dBm, 20 dBm, 23 dBm}, and antenna ports are partially coherent; and
the eighth precoding matrix set may be referred to as G7, corresponding to a case where the respective maximum transmit power supported by each PA of the terminal device is {23 dBm, 20 dBm, 23 dBm} or {23 dBm, 23 dBm, 20 dBm}, and antenna ports are partially coherent.

The three implementations in this manner may be used in combination of two or more. For example, the terminal device may indicate a precoding matrix set from N (N is a positive integer) precoding matrix sets, and indicate another precoding matrix set from M (M is a positive integer) precoding matrix sets. Specific examples are taken below.

Example 1: for a 3-antenna port non-coherent UE, the terminal may report a precoding matrix set from the G0 to G2 (or a TPMI set corresponding to these precoding matrices).

Example 2: for a 3-antenna port non-coherent UE, the terminal may report a precoding matrix set from the G0 to G3 (or a TPMI set corresponding to these precoding matrices).

Example 3: for a 3-antenna port partially coherent UE or a 3-antenna port fully coherent UE, the terminal may report a precoding matrix set from the G0 to G2 (or a TPMI set corresponding to these precoding matrices), and a precoding matrix set from the G0 to G2 and G4 to G5 (or a TPMI set corresponding to these precoding matrices).

Example 4: for a 3-antenna port partially coherent UE or a 3-antenna port fully coherent UE, the terminal may report a precoding matrix set (or a TPMI set corresponding to these precoding matrices) from the G0 to G3, and a precoding matrix set (or a TPMI set corresponding to these precoding matrices) from the G0 to G5.

Example 5: for a 3-antenna port partially coherent UE or a 3-antenna port fully coherent UE, the terminal may report a precoding matrix set (or a TPMI set corresponding to these precoding matrices) from the G0 to G2, and a precoding matrix set (or a TPMI set corresponding to these precoding matrices) from the G0 to G2 and G4 to G6.

Example 6: for a 3-antenna port partially coherent UE or a 3-antenna port fully coherent UE, the terminal may report a precoding matrix set (or a TPMI set corresponding to these precoding matrices) from the G0 to G3, and a precoding matrix set (or a TPMI set corresponding to these precoding matrices) from the G0 to G6.

Example 7: for a 3-antenna port partially coherent UE or a 3-antenna port fully coherent UE, the terminal may report a precoding matrix set (or a TPMI set corresponding to these precoding matrices) from the G0-G2, and a precoding matrix set (or a TPMI set corresponding to these precoding matrices) from the G0 to G2 and G4 to G7.

Example 8: for a 3-antenna port partially coherent UE or a 3-antenna port fully coherent UE, the terminal may report a precoding matrix set (or a TPMI set corresponding to these precoding matrices) from the G0 to G3, and a precoding matrix set (or a TPMI set corresponding to these precoding matrices) from the G0-G7.

Based on this method, terminals with various radio frequency architectures can report their full power transmission capabilities (i.e., precoding matrices capable of supporting the full power transmission), thereby enabling different types of terminals to perform the uplink full power transmission.

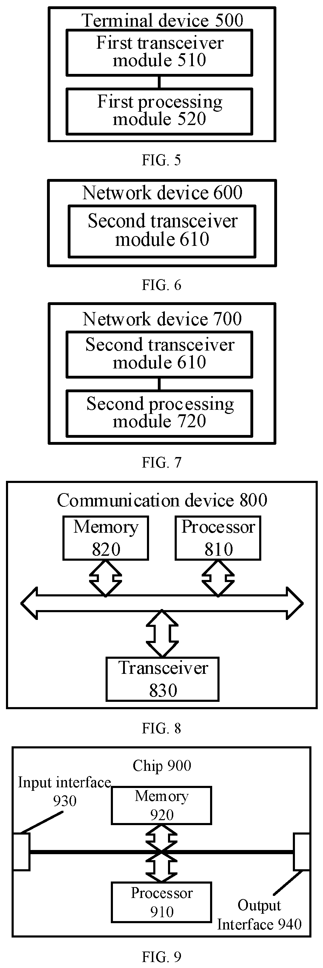

The embodiments of the present disclosure further provide a terminal device. FIG. 5 is a schematic block diagram of a terminal device 500 according to an embodiment of the present application, including:
a first transceiver module 510, configured to receive a TPMI transmitted by a network device; and
a first processing module 510, configured to determine a precoding matrix from a codebook corresponding to a number of transmission layers based on the TPMI, and performs precoding on uplink data using the precoding matrix, where each codeword in the codebook is a matrix with 3 rows.

In some embodiments, in a case where the number of transmission layers is 2, the codebook includes a first codeword, where two rows of the first codeword each include two non-zero QPSK elements, and another row includes two 0 elements.

In some embodiments, the first codeword includes at least two of following codewords: $\frac{1}{\sqrt{6}} \left[\begin{matrix}1 & 1 \\ 1 & - 1 \\ 0 & 0\end{matrix}\right] , \frac{1}{\sqrt{6}} \left[\begin{matrix}1 & 1 \\ j & - j \\ 0 & 0\end{matrix}\right] , \frac{1}{\sqrt{6}} \left[\begin{matrix}1 & 1 \\ 0 & 0 \\ 1 & - 1\end{matrix}\right] , \frac{1}{\sqrt{6}} \left[\begin{matrix}1 & 1 \\ 0 & 0 \\ j & - j\end{matrix}\right] , \frac{1}{\sqrt{6}} \left[\begin{matrix}0 & 0 \\ 1 & 1 \\ 1 & - 1\end{matrix}\right] , and \frac{1}{\sqrt{6}} \left[\begin{matrix}0 & 0 \\ 1 & 1 \\ j & - j\end{matrix}\right] .$

In some embodiments, in a case where the number of transmission layers is 3, the codebook includes a second codeword, where two rows of the second codeword each include two non-zero QPSK elements and a 0 element, another row includes a non-zero QPSK element and two 0 elements, and the two non-zero QPSK elements and the non-zero QPSK element are in different columns.

In some embodiments, the second codeword includes at least two of following codewords: $\frac{1}{\sqrt{5}} \left[\begin{matrix}1 & 1 & 0 \\ 1 & - 1 & 0 \\ 0 & 0 & 1\end{matrix}\right] , \frac{1}{\sqrt{5}} \left[\begin{matrix}1 & 1 & 0 \\ j & - j & 0 \\ 0 & 0 & 1\end{matrix}\right] , \frac{1}{\sqrt{5}} \left[\begin{matrix}1 & 1 & 0 \\ 0 & 0 & 1 \\ 1 & - 1 & 0\end{matrix}\right] , \frac{1}{\sqrt{5}} \left[\begin{matrix}1 & 1 & 0 \\ 0 & 0 & 1 \\ j & - j & 0\end{matrix}\right] , \frac{1}{\sqrt{5}} \left[\begin{matrix}0 & 0 & 1 \\ 1 & 1 & 0 \\ 1 & - 1 & 0\end{matrix}\right] ,$ and $\frac{1}{\sqrt{5}} \left[\begin{matrix}0 & 0 & 1 \\ 1 & 1 & 0 \\ j & - j & 0\end{matrix}\right] ,$

In some embodiments, in a case where the codebook is a non-coherent codebook or a partially coherent codebook, and the number of transmission layers is 1,
when the network device configures a full power transmission mode 1, the codebook includes a third codeword; and
when the network device does not configure the full power transmission mode 1, the codebook does not include the third codeword,
where the third codeword includes at least one of following codewords: $\frac{1}{\sqrt{3}} \left[\begin{matrix}1 \\ 1 \\ 1\end{matrix}\right] , \frac{1}{\sqrt{3}} \left[\begin{matrix}1 \\ 1 \\ j\end{matrix}\right] , \frac{1}{\sqrt{3}} \left[\begin{matrix}1 \\ 1 \\ - 1\end{matrix}\right] , \frac{1}{\sqrt{3}} \left[\begin{matrix}1 \\ 1 \\ - j\end{matrix}\right] , \frac{1}{\sqrt{3}} \left[\begin{matrix}1 \\ j \\ 1\end{matrix}\right] , \frac{1}{\sqrt{3}} \left[\begin{matrix}1 \\ j \\ j\end{matrix}\right] , \frac{1}{\sqrt{3}} \left[\begin{matrix}1 \\ j \\ - 1\end{matrix}\right] , \frac{1}{\sqrt{3}} \left[\begin{matrix}1 \\ j \\ - j\end{matrix}\right] , \frac{1}{\sqrt{3}} \left[\begin{matrix}1 \\ - 1 \\ 1\end{matrix}\right] ,$ $\frac{1}{\sqrt{3}} \left[\begin{matrix}1 \\ - 1 \\ j\end{matrix}\right] , \frac{1}{\sqrt{3}} \left[\begin{matrix}1 \\ - 1 \\ - 1\end{matrix}\right] , \frac{1}{\sqrt{3}} \left[\begin{matrix}1 \\ - 1 \\ - j\end{matrix}\right] , \frac{1}{\sqrt{3}} \left[\begin{matrix}1 \\ - j \\ 1\end{matrix}\right] , \frac{1}{\sqrt{3}} \left[\begin{matrix}1 \\ - j \\ j\end{matrix}\right] , \frac{1}{\sqrt{3}} \left[\begin{matrix}1 \\ - j \\ - 1\end{matrix}\right] , or \frac{1}{\sqrt{3}} \left[\begin{matrix}1 \\ - j \\ - j\end{matrix}\right] .$

In some embodiments, the third codeword is $\frac{1}{\sqrt{3}} \left[\begin{matrix}1 \\ 1 \\ j\end{matrix}\right]$ or $\frac{1}{\sqrt{3}} \left[\begin{matrix}1 \\ 1 \\ 1\end{matrix}\right]$.

In some embodiments, in a case where the codebook is a non-coherent codebook, and the number of transmission layers is 2,
when the network device configures a full power transmission mode 1, the codebook includes a fourth codeword; and
when the network device does not configure the full power transmission mode 1, the codebook does not include the fourth codeword,
where the fourth codeword includes at least one of following codewords: $\frac{1}{\sqrt{3}} \left[\begin{matrix}1 & 0 \\ 1 & 0 \\ 0 & 1\end{matrix}\right] , \frac{1}{\sqrt{3}} \left[\begin{matrix}1 & 0 \\ - 1 & 0 \\ 0 & 1\end{matrix}\right] , \frac{1}{\sqrt{3}} \left[\begin{matrix}1 & 0 \\ j & 0 \\ 0 & 1\end{matrix}\right] , \frac{1}{\sqrt{3}} \left[\begin{matrix}1 & 0 \\ - j & 0 \\ 0 & 1\end{matrix}\right] , \frac{1}{\sqrt{3}} \left[\begin{matrix}1 & 0 \\ 0 & 1 \\ 1 & 0\end{matrix}\right] , \frac{1}{\sqrt{3}} \left[\begin{matrix}1 & 0 \\ 0 & 1 \\ - 1 & 0\end{matrix}\right] ,$ $\frac{1}{\sqrt{3}} \left[\begin{matrix}1 & 0 \\ 0 & 1 \\ j & 0\end{matrix}\right] , \frac{1}{\sqrt{3}} \left[\begin{matrix}1 & 0 \\ 0 & 1 \\ - j & 0\end{matrix}\right] , \frac{1}{\sqrt{3}} \left[\begin{matrix}0 & 0 \\ 1 & 0 \\ 1 & 0\end{matrix}\right] , \frac{1}{\sqrt{3}} \left[\begin{matrix}0 & 1 \\ 1 & 0 \\ - 1 & 0\end{matrix}\right] , \frac{1}{\sqrt{3}} \left[\begin{matrix}0 & 1 \\ 1 & 0 \\ j & 0\end{matrix}\right] , or \frac{1}{\sqrt{3}} \left[\begin{matrix}0 & 1 \\ 1 & 0 \\ - j & 0\end{matrix}\right] .$

In some embodiments, the fourth codeword is $\frac{1}{\sqrt{3}} \left[\begin{matrix}1 & 0 \\ 1 & 0 \\ 0 & 1\end{matrix}\right]$ or $\frac{1}{\sqrt{3}} \left[\begin{matrix}1 & 0 \\ 0 & 1 \\ 1 & 0\end{matrix}\right]$.

In some embodiments, the first transceiver module 510 is further configured to transmit a precoding matrix set capable of supporting a full power transmission or a TPMI set capable of supporting a full power transmission to the network device, where a TPMI in the TPMI set corresponds to a precoding matrix in a predefined codebook, and both a precoding matrix in the precoding matrix set and the precoding matrix corresponding to the TPMI in the TPMI set are matrices with 3 rows.

In some embodiments, the first transceiver module 510 is configured to:
transmit a bitmap to the network device, where each bit of the bitmap corresponds to a precoding matrix set capable of supporting the full power transmission or a TPMI set capable of supporting the full power transmission; or
indicate a precoding matrix set capable of supporting the full power transmission or a TPMI set capable of supporting the full power transmission, from multiple predefined precoding matrix sets or multiple predefined TPMI sets.

In some embodiments, in a case where the terminal device only supports a non-coherent codebook, the bitmap includes 2 bits,
where one bit indicates whether a precoding matrix $\frac{1}{\sqrt{3}} \left[\begin{matrix}1 \\ 0 \\ 0\end{matrix}\right]$ supports the full power transmission, or indicates whether a TPMI corresponding to the precoding matrix $\frac{1}{\sqrt{3}} \left[\begin{matrix}1 \\ 0 \\ 0\end{matrix}\right]$ supports the full power transmission; and
the other bit indicates whether a precoding matrix $\frac{1}{\sqrt{3}} \left[\begin{matrix}1 & 0 \\ 0 & 1 \\ 0 & 0\end{matrix}\right]$ supports the full power transmission, or indicates whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission.

In some embodiments, in a case where the terminal device only supports a non-coherent codebook, the bitmap includes 2 bits,
where one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or indicates whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission, or indicates whether TPMIs corresponding to the precoding matrices $\frac{1}{\sqrt{3}} \left[\begin{matrix}1 & 0 \\ 0 & 1 \\ 0 & 0\end{matrix}\right]$, $\frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission.

In some embodiments, in a case where the terminal device only supports a non-coherent codebook, the bitmap includes 6 bits, where each bit respectively indicates following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission;
whether a precoding matrix $\frac{1}{\sqrt{3}} \left[\begin{matrix}1 & 0 \\ 0 & 1 \\ 0 & 0\end{matrix}\right]$ supports the full power transmission, or whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission;
whether a precoding matrix $\frac{1}{\sqrt{3}} \left[\begin{matrix}1 & 0 \\ 0 & 0 \\ 0 & 1\end{matrix}\right]$ supports the full power transmission, or whether a TPMI corresponding to the precoding matrix $\frac{1}{\sqrt{3}} \left[\begin{matrix}1 & 0 \\ 0 & 0 \\ 0 & 1\end{matrix}\right]$ supports the full power transmission; and
whether a precoding matrix $\frac{1}{\sqrt{3}} \left[\begin{matrix}0 & 0 \\ 1 & 0 \\ 0 & 1\end{matrix}\right]$ supports the full power transmission, or whether a TPMI corresponding to the precoding matrix $\frac{1}{\sqrt{3}} \left[\begin{matrix}0 & 0 \\ 1 & 0 \\ 0 & 1\end{matrix}\right]$ supports the full power transmission.

In some embodiments, in a case where the terminal device supports a partially coherent codebook, the bitmap includes 2 bits,
where one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and
the other bit indicates whether a precoding matrix $\frac{1}{\sqrt{3}} \left[\begin{matrix}1 \\ 0 \\ x\end{matrix}\right]$ supports the full power transmission, or whether a TPMI corresponding to the precoding matrix $\frac{1}{\sqrt{3}} \left[\begin{matrix}1 \\ 0 \\ x\end{matrix}\right]$ supports the full power transmission;
   or
where one bit indicates whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
the other bit indicates whether a precoding matrix $\frac{1}{\sqrt{3}} \left[\begin{matrix}1 \\ x \\ 0\end{matrix}\right]$ supports the full power transmission, or whether a TPMI corresponding to the precoding matrix $\frac{1}{\sqrt{3}} \left[\begin{matrix}1 \\ x \\ 0\end{matrix}\right]$ supports the full power transmission,
where x is a non-zero QPSK element.

In some embodiments, in a case where the terminal device supports a partially coherent codebook, the bitmap includes 2 bits,
where one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and
the other bit indicates whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & -1\end{matrix}\right]$ and $\frac{1}{\sqrt{3}} \left[\begin{matrix}1 & 1 \\ 0 & 0 \\ j & - j\end{matrix}\right]$ support the full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & -1\end{matrix}\right]$ and $\frac{1}{\sqrt{3}} \left[\begin{matrix}1 & 1 \\ 0 & 0 \\ j & - j\end{matrix}\right]$ support the full power transmission;
   or
where one bit indicates whether $\frac{1}{\sqrt{3}} \left[\begin{matrix}0 \\ 0 \\ 1\end{matrix}\right]$ supports the full power transmission, or whether a TPMI corresponding to the $\frac{1}{\sqrt{3}} \left[\begin{matrix}0 \\ 0 \\ 1\end{matrix}\right]$ supports the full power transmission; and
the other bit indicates whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission,
where x is a non-zero QPSK element.

In some embodiments, in a case where the terminal device supports a partially coherent codebook, the bitmap includes 2 bits,
where one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission, or whether TPMIs corresponding to the precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission,
where x is a non-zero QPSK element.

In some embodiments, in a case where the terminal device supports a partially coherent codebook, the bitmap includes 4 bits, where the 4 bits respectively indicate following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission,
where x is a non-zero QPSK element.

In some embodiments, each of the multiple predefined precoding matrix sets or each of the multiple predefined TPMI sets corresponds to a respective precoding matrix set that includes a first precoding matrix set, a second precoding matrix set and a third precoding matrix set; or includes a first precoding matrix set, a second precoding matrix set and a fourth precoding matrix set; or includes a first precoding matrix set, a second precoding matrix set, a third precoding matrix set and a fourth precoding matrix set,
where the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$; and
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

In some embodiments, in a case where the terminal device supports a partially coherent codebook or a fully coherent codebook, each of the multiple predefined precoding matrix sets or each of the multiple predefined TPMI sets corresponds to a respective precoding matrix set that includes a first precoding matrix set, a second precoding matrix set, a fifth precoding matrix set and a sixth precoding matrix set, and further includes at least one of a third precoding matrix set or a fourth precoding matrix set,
where the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$;
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$;
the fifth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right]\right\}$; and
the sixth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right]\right.$, $\frac{1}{\sqrt{3}} \left[\begin{matrix}1 & 0 \\ 0 & 0 \\ 0 & 1\end{matrix}\right] , \left.\frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ .

In some embodiments, each of the multiple predefined precoding matrix sets or each of the multiple predefined TPMI sets corresponds to the respective precoding matrix set that further includes a seventh precoding matrix set and/or an eighth precoding matrix set,
where the seventh precoding matrix set is $\left\{\frac{1}{\sqrt{3}}\left[\begin{matrix}0 \\ 1 \\ 0\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}0 \\ 0 \\ 1\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ; and
the eighth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right]\right. ,$ $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \left. \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right]\right. ,$ $\frac{1}{\sqrt{3}} \left[\begin{matrix}1 \\ 0 \\ - j\end{matrix}\right] , \frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] \left., \frac{1}{\sqrt{3}}\left[\begin{matrix}0 & 0 \\ 1 & 0 \\ 0 & 1\end{matrix}\right]\right\}$.

In some embodiments, the first transceiver module 510 is further configured to transmit an SRS to the network device, where the SRS includes 3 antenna ports.

In some embodiments, the first transceiver module 510 is configured to: receive the TPMI and indication information of the number of transmission layers transmitted by the network device, where the TPMI and the indication information of the number of transmission layers are indicated through a same information field.

The terminal device 500 in the embodiments of the present disclosure can achieve the corresponding functions of the terminal device in the method embodiments. For the processes, functions, implementations, and beneficial effects corresponding to various modules (sub-modules, units, or components, etc.) in the terminal device 500, please refer to the corresponding descriptions for the method embodiments, which will not be repeated here. It should be noted that the functions described for various modules (sub-modules, units, or components, etc.) in the terminal device 500 of the embodiments of the present disclosure can be implemented by different modules (sub-modules, units, or components, etc.) or by the same module (sub-module, unit, or component, etc.).

The embodiments of the present disclosure also propose a network device. FIG. 6 is a schematic block diagram of a network device 600 according to an embodiment of the present disclosure, including:
a second transceiver module 610, configured to transmit a TPMI to the terminal device, and receive data precoded using a precoding matrix by the terminal device;
where the precoding matrix is determined from a codebook corresponding to a number of transmission layers based on TPMI, and each codeword in the codebook is a matrix with 3 rows.

In the embodiment, for codewords included in the codebook, please refer to the related content in the terminal device 500, which will not be repeated here.

In some implementations, the second transceiver module 610 is further configured to: receive a precoding matrix set capable of supporting a full power transmission or a TPMI set capable of supporting a full power transmission from the terminal device; where a TPMI in the TPMI set corresponds to a precoding matrix in a predefined codebook, and both a precoding matrices in the precoding matrix set and the precoding matrix corresponding to the TPMI in the TPMI set are matrices with 3 rows.

In some implementations, the second transceiver module 610 is configured to: receive a bitmap from the terminal device, where each bit of the bitmap corresponds to a precoding matrix set capable of supporting the full power transmission or a TPMI set capable of supporting the full power transmission; or the terminal device indicates a precoding matrix set capable of supporting the full power transmission or a TPMI set capable of supporting the full power transmission, from multiple predefined precoding matrix sets or multiple predefined TPMI sets.

FIG.7 is a schematic block diagram of a network device 700 according to an embodiment of the present disclosure. As illustrated in FIG. 7, the network device provided in the embodiment includes a second transceiver module 610 and a second processing module 720, where
the second transceiver module 610 is further configured to: receive an SRS from the terminal device, where the SRS includes 3 antenna ports; and
the second processing module 720 is configured to: determine a precoding matrix from a pre-agreed codebook based on the SRS, where the TPMI is used to indicate the precoding matrix.

In some implementations, the second transceiver module 610 is configured to transmit the TPMI and indication information of the number of transmission layers to the terminal device, where the TPMI and the indication information of the number of transmission layers are indicated through a same information field.

For the specific content of the bitmap and the specific manner in which the terminal device indicates the precoding matrix set capable of supporting the full power transmission or TPMI set capable of supporting the full power transmission, please refer to the related content in the terminal device 500 of the present disclosure, which will not be repeated here.

The network device 600 and the network device 700 in the embodiments of the present disclosure can achieve the corresponding functions of the network device in the method embodiments. For the processes, functions, implementations, and beneficial effects corresponding to various module (sub-modules, units, or components, etc.) in the network device 600 and the network device 700, please refer to the corresponding descriptions for the method embodiments, which will not be repeated here. It should be noted that the functions described for various modules (sub-modules, units, or components, etc.) in the network device 600 and the network device 700 in the embodiments of the present disclosure can be implemented by different modules (sub-modules, units, or components, etc.) or by the same module (sub-module, unit, or component, etc.).

FIG. 8 is a schematic structural diagram of a communication device 800 according to an embodiment of the present disclosure. The communication device 800 includes a processor 810, and the processor 810 can call a computer program from a memory and execute the computer program, to enable the communication device 800 to implement the method in the embodiments of the present disclosure.

In an embodiment, the communication device 800 may further include a memory 820. The processor 810 can call a computer program from the memory 820 and execute the computer program, to enable the communication device 800 to implement the method in the embodiments of the present disclosure.

Here, the memory 820 may be a separate device independent of the processor 810 or may be integrated into the processor 810.

In an embodiment, the communication device 800 may further include a transceiver 830, and the processor 810 can control the transceiver 830 to communicate with other devices. Specifically, the processor 810 can control the transceiver 830 to transmit information or data to other devices, or receive information or data transmitted by other devices.

Here, the transceiver 830 may include a transmitter and a receiver. The transceiver 830 may further include antenna(s), and the number of antennas may be one or more.

In an embodiment, the communication device 800 may be the terminal device in the embodiments of the present disclosure, and the communication device 800 can implement the corresponding processes performed by the terminal device in various methods of the embodiments of the present disclosure, which will not repeated here for brevity.

In an embodiment, the communication device 800 may be the network device in the embodiments of the present disclosure, and the communication device 800 can implement the corresponding processes performed by the network device in various methods of the embodiments of the present disclosure, which will not repeated here for brevity.

FIG. 9 is a schematic structural diagram of a chip 900 according to an embodiment of the present disclosure. The chip 900 includes a processor 910, which can call a computer program from a memory and execute the computer program to implement the method in the embodiments of the present disclosure.

In an embodiment, the chip 900 may further include a memory 920. The processor 910 can call the computer program from the memory 920 and execute the computer program to implement the methods performed by the terminal device and the network device in the embodiments of the present disclosure.

The memory 920 may be a separate device independent of the processor 910 or may be integrated into the processor 910.

In an embodiment, the chip 900 may further include an input interface 930, and the processor 910 can control the input interface 930 to communicate with other devices or other chips. Specifically, the processor 910 can control the input interface 930 to obtain information or data transmitted by other devices or other chips.

In an embodiment, the chip 900 may further include an output interface 940, and the processor 910 can control the output interface 940 to communicate with other devices or other chips. Specifically, the processor 910 can control the output interface 940 to output information or data to other devices or other chips.

In an embodiment, the chip may be applied to the terminal device in the embodiments of the present disclosure, and the chip can implement the corresponding processes performed by the terminal device in the method of the embodiments of the present disclosure, which will not be repeated here for brevity.

In an embodiment, the chip may be applied to the network device in the embodiments of the present disclosure, and the chip can implement the corresponding processes performed by the network device in the method of the embodiments of the present disclosure, which will not be repeated here for brevity.

The chip applied to the terminal device and the network device may be the same chip or different chips.

It should be understood that the chip mentioned in the embodiments of the present disclosure may also be referred to as a system-level chip, a system chip, a chip system, or a system-on-a-chip, etc.

The above-mentioned processor may be a general-purpose processor, a digital signal processor (DSP), a field programmable gate array (FPGA), an application specific integrated circuit (ASIC), or other programmable logic devices, transistor logic devices, discrete hardware components, etc. Here, the general-purpose processor may be a microprocessor or any conventional processor, etc.

The above-mentioned memory may be a volatile memory or a non-volatile memory, or may include both the volatile memory and non-volatile memory. Here, the non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above-mentioned memory is exemplary but not restrictive description. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM), etc. That is, the memory in the embodiments of the present disclosure is intended to include, but is not limited to, these memories and any other suitable types of memory.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some procedures or functions described in the embodiments of the present disclosure are generated. The computer may be a general-purpose computer, a dedicated-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that includes one or more available medium. The available medium may be a magnetic medium (e.g., a floppy disk, a hard disk, a magnetic tape), an optical medium (e.g., a digital video disc, DVD), or a semiconductor medium (e.g., a solid state disk (SSD)).

It should be understood that in various embodiments of the present disclosure, the sequence numbers of various processes do not imply the order of execution. The execution order of various processes should be determined by their functions and internal logic, and should not impose any limitation on the implementation process of the embodiments of the present disclosure.

Those skilled in the art can clearly understand that, for convenience and brevity of description, the specific working processes of the above-mentioned system, apparatus, and unit can refer to the corresponding processes in the method embodiments, which will not be repeated here.

The above description is only specific implementations of the present disclosure, but the protection scope of the present disclosure is not limited thereto. Any person skilled in the art familiar with the technical field may easily think of changes or substitutions within the technical scope disclosed in the present disclosure, all of which should be included in the protection scope of the present disclosure. Therefore, the protection scope of the present disclosure shall be subject to the protection scope of the claims.

## Claims

1. A precoding method, comprising:
receiving, by a terminal device, a transmit precoding matrix indicator (TPMI) transmitted by a network device;
determining, by the terminal device, a precoding matrix from a codebook corresponding to a number of transmission layers based on the TPMI, wherein each codeword in the codebook is a matrix with 3 rows; and
performing, by the terminal device, precoding on uplink data using the precoding matrix.

2. The method according to claim 1, wherein in a case where the number of transmission layers is 2, the codebook comprises a first codeword, wherein two rows of the first codeword each comprise two non-zero quadrature phase shift keying (QPSK) elements, and another row comprises two 0 elements.

3. The method according to claim 2, wherein the first codeword comprises at least two of following codewords: $\frac{1}{\sqrt{6}} \left[\begin{matrix}1 & 1 \\ 1 & - 1 \\ 0 & 0\end{matrix}\right] , \frac{1}{\sqrt{6}} \left[\begin{matrix}1 & 1 \\ j & - j \\ 0 & 0\end{matrix}\right] , \frac{1}{\sqrt{6}} \left[\begin{matrix}1 & 1 \\ 0 & 0 \\ 1 & - 1\end{matrix}\right] , \frac{1}{\sqrt{6}} \left[\begin{matrix}1 & 1 \\ 0 & 0 \\ j & - j\end{matrix}\right] , \frac{1}{\sqrt{6}} \left[\begin{matrix}0 & 0 \\ 1 & 1 \\ 1 & - 1\end{matrix}\right] , and \frac{1}{\sqrt{6}} \left[\begin{matrix}0 & 0 \\ 1 & 1 \\ j & - j\end{matrix}\right] .$

4. The method according to claim 1, wherein in a case where the number of transmission layers is 3, the codebook comprises a second codeword, wherein two rows of the second codeword each comprise two non-zero QPSK elements and a 0 element, another row comprises a non-zero QPSK element and two 0 elements, and the two non-zero QPSK elements and the non-zero QPSK element are in different columns.

5. The method according to claim 4, wherein the second codeword comprises at least two of following codewords: $\frac{1}{\sqrt{5}} \left[\begin{matrix}1 & 1 & 0 \\ 1 & - 1 & 0 \\ 0 & 0 & 1\end{matrix}\right] , \frac{1}{\sqrt{5}} \left[\begin{matrix}1 & 1 & 0 \\ j & - j & 0 \\ 0 & 0 & 1\end{matrix}\right] , \frac{1}{\sqrt{5}} \left[\begin{matrix}1 & 1 & 0 \\ 0 & 0 & 1 \\ 1 & - 1 & 0\end{matrix}\right] , \frac{1}{\sqrt{5}} \left[\begin{matrix}1 & 1 & 0 \\ 0 & 0 & 1 \\ j & - j & 0\end{matrix}\right] , \frac{1}{\sqrt{5}} \left[\begin{matrix}0 & 0 & 1 \\ 1 & 1 & 0 \\ 1 & - 1 & 0\end{matrix}\right] ,$ and $\frac{1}{\sqrt{5}} \left[\begin{matrix}0 & 0 & 1 \\ 1 & 1 & 0 \\ j & - j & 0\end{matrix}\right] .$

6. The method according to claim 1, wherein in a case where the codebook is a non-coherent codebook or a partially coherent codebook, and the number of transmission layers is 1,
when the network device configures a full power transmission mode 1, the codebook comprises a third codeword; and
when the network device does not configure the full power transmission mode 1, the codebook does not comprise the third codeword,
wherein the third codeword comprises at least one of following codewords: $\frac{1}{\sqrt{3}} \left[\begin{matrix}1 \\ 1 \\ 1\end{matrix}\right] , \frac{1}{\sqrt{3}} \left[\begin{matrix}1 \\ 1 \\ j\end{matrix}\right] , \frac{1}{\sqrt{3}} \left[\begin{matrix}1 \\ 1 \\ - 1\end{matrix}\right] , \frac{1}{\sqrt{3}} \left[\begin{matrix}1 \\ 1 \\ - j\end{matrix}\right] , \frac{1}{\sqrt{3}} \left[\begin{matrix}1 \\ j \\ 1\end{matrix}\right] , \frac{1}{\sqrt{3}} \left[\begin{matrix}1 \\ j \\ j\end{matrix}\right] , \frac{1}{\sqrt{3}} \left[\begin{matrix}1 \\ j \\ - 1\end{matrix}\right] , \frac{1}{\sqrt{3}} \left[\begin{matrix}1 \\ j \\ - j\end{matrix}\right] , \frac{1}{\sqrt{3}} \left[\begin{matrix}1 \\ - 1 \\ 1\end{matrix}\right] ,$ $\frac{1}{\sqrt{3}} \left[\begin{matrix}1 \\ - 1 \\ j\end{matrix}\right] , \frac{1}{\sqrt{3}} \left[\begin{matrix}1 \\ - 1 \\ - 1\end{matrix}\right] , \frac{1}{\sqrt{3}} \left[\begin{matrix}1 \\ - 1 \\ - j\end{matrix}\right] , \frac{1}{\sqrt{3}} \left[\begin{matrix}1 \\ - j \\ 1\end{matrix}\right] , \frac{1}{\sqrt{3}} \left[\begin{matrix}1 \\ - j \\ j\end{matrix}\right] , \frac{1}{\sqrt{3}} \left[\begin{matrix}1 \\ - j \\ - 1\end{matrix}\right] , or \frac{1}{\sqrt{3}} \left[\begin{matrix}1 \\ - j \\ - j\end{matrix}\right] .$

7. The method according to claim 6, wherein the third codeword is $\frac{1}{\sqrt{3}} \left[\begin{matrix}1 \\ 1 \\ j\end{matrix}\right]$ or $\frac{1}{\sqrt{3}} \left[\begin{matrix}1 \\ 1 \\ 1\end{matrix}\right]$.

8. The method according to claim 1, wherein in a case where the codebook is a non-coherent codebook, and the number of transmission layers is 2,
when the network device configures a full power transmission mode 1, the codebook comprises a fourth codeword; and
when the network device does not configure the full power transmission mode 1, the codebook does not comprise the fourth codeword,
wherein the fourth codeword comprises at least one of following codewords: $\frac{1}{\sqrt{3}} \left[\begin{matrix}1 & 0 \\ 1 & 0 \\ 0 & 1\end{matrix}\right] , \frac{1}{\sqrt{3}} \left[\begin{matrix}1 & 0 \\ - 1 & 0 \\ 0 & 1\end{matrix}\right] , \frac{1}{\sqrt{3}} \left[\begin{matrix}1 & 0 \\ j & 0 \\ 0 & 1\end{matrix}\right] , \frac{1}{\sqrt{3}} \left[\begin{matrix}1 & 0 \\ - j & 0 \\ 0 & 1\end{matrix}\right] , \frac{1}{\sqrt{3}} \left[\begin{matrix}1 & 0 \\ 0 & 1 \\ 1 & 0\end{matrix}\right] , \frac{1}{\sqrt{3}} \left[\begin{matrix}1 & 0 \\ 0 & 1 \\ - 1 & 0\end{matrix}\right] , \frac{1}{\sqrt{3}} \left[\begin{matrix}1 & 0 \\ 0 & 1 \\ j & 0\end{matrix}\right] ,$ $\frac{1}{\sqrt{3}} \left[\begin{matrix}1 & 0 \\ 0 & 1 \\ - j & 0\end{matrix}\right] , \frac{1}{\sqrt{3}} \left[\begin{matrix}0 & 1 \\ 1 & 0 \\ 1 & 0\end{matrix}\right] , \frac{1}{\sqrt{3}} \left[\begin{matrix}0 & 1 \\ 1 & 0 \\ - 1 & 0\end{matrix}\right] , \frac{1}{\sqrt{3}} \left[\begin{matrix}0 & 1 \\ 1 & 0 \\ j & 0\end{matrix}\right] , or \frac{1}{\sqrt{3}} \left[\begin{matrix}0 & 1 \\ 1 & 0 \\ - j & 0\end{matrix}\right] .$

9. The method according to claim 8, wherein the fourth codeword is 1 $\frac{1}{\sqrt{3}} \left[\begin{matrix}1 & 0 \\ 1 & 0 \\ 0 & 1\end{matrix}\right]$ or $\frac{1}{\sqrt{3}} \left[\begin{matrix}1 & 0 \\ 0 & 1 \\ 1 & 0\end{matrix}\right]$.

10. The method according to claim 1, wherein before receiving, by the terminal device, the transmission precoding matrix indicator (TPMI) transmitted by the network device, the method further comprises:
transmitting, by the terminal device, a precoding matrix set capable of supporting a full power transmission or a TPMI set capable of supporting a full power transmission to the network device, wherein a TPMI in the TPMI set corresponds to a precoding matrix in a predefined codebook, and both a precoding matrix in the precoding matrix set and the precoding matrix corresponding to the TPMI in the TPMI set are matrices with 3 rows.

11. The method according to claim 10, wherein transmitting, by the terminal device, the precoding matrix set capable of supporting the full power transmission or the TPMI set capable of supporting the full power transmission to the network device comprises:
transmitting, by the terminal device, a bitmap to the network device, wherein each bit of the bitmap corresponds to a precoding matrix set capable of supporting the full power transmission or a TPMI set capable of supporting the full power transmission; or
indicating, by the terminal device, a precoding matrix set capable of supporting the full power transmission or a TPMI set capable of supporting the full power transmission, from a plurality of predefined precoding matrix sets or a plurality of predefined TPMI sets.

12. The method according to claim 11, wherein in a case where the terminal device only supports a non-coherent codebook, the bitmap comprises 2 bits,
wherein one bit indicates whether a precoding matrix $\frac{1}{\sqrt{3}} \left[\begin{matrix}1 \\ 0 \\ 0\end{matrix}\right]$ supports the full power transmission, or indicates whether a TPMI corresponding to the precoding matrix $\frac{1}{\sqrt{3}} \left[\begin{matrix}1 \\ 0 \\ 0\end{matrix}\right]$ supports the full power transmission; and
the other bit indicates whether a precoding matrix $\frac{1}{\sqrt{3}} \left[\begin{matrix}1 & 0 \\ 0 & 1 \\ 0 & 0\end{matrix}\right]$ supports the full power transmission, or indicates whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission.

13. The method according to claim 11, wherein in a case where the terminal device only supports a non-coherent codebook, the bitmap comprises 2 bits,
wherein one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and support the full power transmission, or indicates whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission, or indicates whether TPMIs corresponding to the precoding matrices $\frac{1}{\sqrt{3}} \left[\begin{matrix}1 & 0 \\ 0 & 1 \\ 0 & 0\end{matrix}\right]$, $\frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission.

14. The method according to claim 11, wherein in a case where the terminal device only supports a non-coherent codebook, the bitmap comprises 6 bits, wherein each bit respectively indicates following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission;
whether a precoding matrix $\frac{1}{\sqrt{3}} \left[\begin{matrix}1 & 0 \\ 0 & 1 \\ 0 & 0\end{matrix}\right]$ supports the full power transmission, or whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission;
whether a precoding matrix $\frac{1}{\sqrt{3}} \left[\begin{matrix}1 & 0 \\ 0 & 0 \\ 0 & 1\end{matrix}\right]$ supports the full power transmission, or whether a TPMI corresponding to the precoding matrix $\frac{1}{\sqrt{3}} \left[\begin{matrix}1 & 0 \\ 0 & 0 \\ 0 & 1\end{matrix}\right]$ supports the full power transmission; and
whether a precoding matrix $\frac{1}{\sqrt{3}} \left[\begin{matrix}0 & 0 \\ 1 & 0 \\ 0 & 1\end{matrix}\right]$ supports the full power transmission, or whether a TPMI corresponding to the precoding matrix $\frac{1}{\sqrt{3}} \left[\begin{matrix}0 & 0 \\ 1 & 0 \\ 0 & 1\end{matrix}\right]$ supports the full power transmission.

15. The method according to claim 11, wherein in a case where the terminal device supports a partially coherent codebook, the bitmap comprises 2 bits,
wherein one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix supports the full power transmission; and
the other bit indicates whether a precoding matrix $\frac{1}{\sqrt{3}} \left[\begin{matrix}1 \\ 0 \\ x\end{matrix}\right]$ supports the full power transmission, or whether a TPMI corresponding to the precoding matrix $\frac{1}{\sqrt{3}} \left[\begin{matrix}1 \\ 0 \\ x\end{matrix}\right]$ supports the full power transmission;
or
wherein one bit indicates whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
the other bit indicates whether a precoding matrix $\frac{1}{\sqrt{3}} \left[\begin{matrix}1 \\ x \\ 0\end{matrix}\right]$ supports the full power transmission, or whether a TPMI corresponding to the precoding matrix supports the full power transmission,
wherein x is a non-zero QPSK element.

16. The method according to claim 11, wherein in a case where the terminal device supports a partially coherent codebook, the bitmap comprises 2 bits,
wherein one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and
the other bit indicates whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission; or
wherein one bit indicates whether $\frac{1}{\sqrt{3}} \left[\begin{matrix}0 \\ 0 \\ 1\end{matrix}\right]$ supports the full power transmission, or whether a TPMI corresponding to the $\frac{1}{\sqrt{3}} \left[\begin{matrix}0 \\ 0 \\ 1\end{matrix}\right]$ supports the full power transmission; and
the other bit indicates whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission,
wherein x is a non-zero QPSK element.

17. The method according to claim 11, wherein in a case where the terminal device supports a partially coherent codebook, the bitmap comprises 2 bits,
wherein one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or whether TPMI, corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission, or whether TPMIs corresponding to the precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission,
wherein x is a non-zero QPSK element.

18. The method according to claim 11, wherein in a case where the terminal device supports a partially coherent codebook, the bitmap comprises 4 bits, wherein the 4 bits respectively indicate following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission,
wherein x is a non-zero QPSK element.

19. The method according to claim 11, wherein each of the plurality of predefined precoding matrix sets or each of the plurality of predefined TPMI sets corresponds to a respective precoding matrix set that comprises a first precoding matrix set, a second precoding matrix set and a third precoding matrix set; or comprises a first precoding matrix set, a second precoding matrix set and a fourth precoding matrix set; or comprises a first precoding matrix set, a second precoding matrix set, a third precoding matrix set and a fourth precoding matrix set,
wherein the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$; and
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

20. The method according to claim 11, wherein in a case where the terminal device supports a partially coherent codebook or a fully coherent codebook, each of the plurality of predefined precoding matrix sets or each of the plurality of predefined TPMI sets corresponds to a respective precoding matrix set that comprises a first precoding matrix set, a second precoding matrix set, a fifth precoding matrix set and a sixth precoding matrix set, and further comprises at least one of a third precoding matrix set or a fourth precoding matrix set,
wherein the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$;
the fourth precoding matrix set $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$;
the fifth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right]\right\}$ ;
the sixth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

21. The method according to claim 20, wherein each of the plurality of predefined precoding matrix sets or each of the plurality of predefined TPMI sets corresponds to the respective precoding matrix set that further comprises a seventh precoding matrix set and/or an eighth precoding matrix set,
wherein the seventh precoding matrix set is $\left\{\frac{1}{\sqrt{3}}\left[\begin{matrix}0 \\ 1 \\ 0\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}0 \\ 0 \\ 1\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ; and
the eighth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \right. \frac{1}{\sqrt{3}} \left[\begin{matrix}1 \\ - j \\ 0\end{matrix}\right] ,$ $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \left.\frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \right. \frac{1}{\sqrt{3}} \left[\begin{matrix}1 \\ 0 \\ j\end{matrix}\right] ,$ $\frac{1}{\sqrt{3}} \left[\begin{matrix}1 \\ 0 \\ - j\end{matrix}\right] , \frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \left.\frac{1}{\sqrt{3}}\left[\begin{matrix}0 & 0 \\ 1 & 0 \\ 0 & 1\end{matrix}\right]\right\}$.

22. The method according to any one of claims 1 to 21, wherein before receiving, by the terminal device, the TPMI transmitted by the network device, the method further comprises:
transmitting, by the terminal device, a sounding reference signal (SRS) to the network device, the SRS comprising 3 antenna ports.

23. The method according to any one of claims 1 to 22, wherein receiving, by the terminal device, the TPMI transmitted by the network device comprises:
receiving, by the terminal device, the TPMI and indication information of the number of transmission layers transmitted by the network device, wherein the TPMI and the indication information of the number of transmission layers are indicated through a same information field.

24. A precoding method, comprising:
transmitting, by a network device, a transmit precoding matrix indicator (TPMI) to a terminal device; and
receiving, by the network device, data precoded using a precoding matrix by the terminal device,
wherein the precoding matrix is determined from a codebook corresponding to a number of transmission layers based on the TPMI, and each codeword in the codebook is a matrix with 3 rows.

25. The method according to claim 24, wherein in a case where the number of transmission layers is 2, the codebook comprises a first codeword, wherein two rows of the first codeword each comprise two non-zero quadrature phase shift keying (QPSK) elements, and another row includes two 0 elements.

26. The method according to claim 25, wherein the first codeword comprises at least two of following codewords: $\frac{1}{\sqrt{6}} \left[\begin{matrix}1 & 1 \\ 1 & - 1 \\ 0 & 0\end{matrix}\right] , \frac{1}{\sqrt{6}} \left[\begin{matrix}1 & 1 \\ j & - j \\ 0 & 0\end{matrix}\right] , \frac{1}{\sqrt{6}} \left[\begin{matrix}1 & 1 \\ 0 & 0 \\ 1 & - 1\end{matrix}\right] , \frac{1}{\sqrt{6}} \left[\begin{matrix}1 & 1 \\ 0 & 0 \\ j & - j\end{matrix}\right] , \frac{1}{\sqrt{6}} \left[\begin{matrix}0 & 0 \\ 1 & 1 \\ 1 & - 1\end{matrix}\right] , and \frac{1}{\sqrt{6}} \left[\begin{matrix}0 & 0 \\ 1 & 1 \\ j & - j\end{matrix}\right] .$

27. The method according to claim 24, wherein in a case where the number of transmission layers is 3, the codebook comprises a second codeword, wherein two rows of the second codeword each comprise two non-zero QPSK elements and a 0 element, another row comprises a non-zero QPSK element and two 0 elements, and the two non-zero QPSK elements and the non-zero QPSK element are in different columns.

28. The method according to claim 27, wherein the second codeword comprises at least two of following codewords: $\frac{1}{\sqrt{5}} \left[\begin{matrix}1 & 1 & 0 \\ 1 & - 1 & 0 \\ 0 & 0 & 1\end{matrix}\right] , \frac{1}{\sqrt{5}} \left[\begin{matrix}1 & 1 & 0 \\ j & - j & 0 \\ 0 & 0 & 1\end{matrix}\right] , \frac{1}{\sqrt{5}} \left[\begin{matrix}1 & 1 & 0 \\ 0 & 0 & 1 \\ 1 & - 1 & 0\end{matrix}\right] , \frac{1}{\sqrt{5}} \left[\begin{matrix}1 & 1 & 0 \\ 0 & 0 & 1 \\ j & - j & 0\end{matrix}\right] , \frac{1}{\sqrt{5}} \left[\begin{matrix}0 & 0 & 1 \\ 1 & 1 & 0 \\ 1 & - 1 & 0\end{matrix}\right] ,$ and $\frac{1}{\sqrt{5}} \left[\begin{matrix}0 & 0 & 1 \\ 1 & 1 & 0 \\ j & - j & 0\end{matrix}\right] .$

29. The method according to claim 24, wherein in a case where the codebook is a non-coherent codebook or a partially coherent codebook, and the number of transmission layers is 1,
when the network device configures a full power transmission mode 1, the codebook comprises a third codeword; and
when the network device does not configure the full power transmission mode 1, the codebook does not comprise the third codeword,
wherein the third codeword comprises at least one of following codewords: $\frac{1}{\sqrt{3}} \left[\begin{matrix}1 \\ 1 \\ 1\end{matrix}\right] , \frac{1}{\sqrt{3}} \left[\begin{matrix}1 \\ 1 \\ j\end{matrix}\right] , \frac{1}{\sqrt{3}} \left[\begin{matrix}1 \\ 1 \\ - 1\end{matrix}\right] , \frac{1}{\sqrt{3}} \left[\begin{matrix}1 \\ 1 \\ - j\end{matrix}\right] , \frac{1}{\sqrt{3}} \left[\begin{matrix}1 \\ j \\ 1\end{matrix}\right] , \frac{1}{\sqrt{3}} \left[\begin{matrix}1 \\ j \\ j\end{matrix}\right] , \frac{1}{\sqrt{3}} \left[\begin{matrix}1 \\ j \\ - 1\end{matrix}\right] , \frac{1}{\sqrt{3}} \left[\begin{matrix}1 \\ j \\ - j\end{matrix}\right] , \frac{1}{\sqrt{3}} \left[\begin{matrix}1 \\ - 1 \\ 1\end{matrix}\right] ,$ $\frac{1}{\sqrt{3}} \left[\begin{matrix}1 \\ - 1 \\ j\end{matrix}\right] , \frac{1}{\sqrt{3}} \left[\begin{matrix}1 \\ - 1 \\ - 1\end{matrix}\right] , \frac{1}{\sqrt{3}} \left[\begin{matrix}1 \\ - 1 \\ - j\end{matrix}\right] , \frac{1}{\sqrt{3}} \left[\begin{matrix}1 \\ - j \\ 1\end{matrix}\right] , \frac{1}{\sqrt{3}} \left[\begin{matrix}1 \\ - j \\ j\end{matrix}\right] , \frac{1}{\sqrt{3}} \left[\begin{matrix}1 \\ - j \\ - 1\end{matrix}\right] , or \frac{1}{\sqrt{3}} \left[\begin{matrix}1 \\ - j \\ - j\end{matrix}\right] .$

30. The method according to claim 29, wherein the third codeword is $\frac{1}{\sqrt{3}} \left[\begin{matrix}1 \\ 1 \\ j\end{matrix}\right]$ or $\frac{1}{\sqrt{3}} \left[\begin{matrix}1 \\ 1 \\ 1\end{matrix}\right]$.

31. The method according to claim 24, wherein in a case where the codebook is a non-coherent codebook, and the number of transmission layers is 2,
when the network device configures a full power transmission mode 1, the codebook comprises a fourth codeword; and
when the network device does not configure the full power transmission mode 1, the codebook does not comprise the fourth codeword,
wherein the fourth codeword comprises at least one of following codewords: $\frac{1}{\sqrt{3}} \left[\begin{matrix}1 & 0 \\ 1 & 0 \\ 0 & 1\end{matrix}\right] , \frac{1}{\sqrt{3}} \left[\begin{matrix}1 & 0 \\ - 1 & 0 \\ 0 & 1\end{matrix}\right] , \frac{1}{\sqrt{3}} \left[\begin{matrix}1 & 0 \\ j & 0 \\ 0 & 1\end{matrix}\right] , \frac{1}{\sqrt{3}} \left[\begin{matrix}1 & 0 \\ - j & 0 \\ 0 & 1\end{matrix}\right] , \frac{1}{\sqrt{3}} \left[\begin{matrix}1 & 0 \\ 0 & 1 \\ 1 & 0\end{matrix}\right] , \frac{1}{\sqrt{3}} \left[\begin{matrix}1 & 0 \\ 0 & 1 \\ - 1 & 0\end{matrix}\right] , \frac{1}{\sqrt{3}} \left[\begin{matrix}1 & 0 \\ 0 & 1 \\ j & 0\end{matrix}\right] ,$ $\frac{1}{\sqrt{3}} \left[\begin{matrix}1 & 0 \\ 0 & 1 \\ - j & 0\end{matrix}\right] , \frac{1}{\sqrt{3}} \left[\begin{matrix}0 & 1 \\ 1 & 0 \\ 1 & 0\end{matrix}\right] , \frac{1}{\sqrt{3}} \left[\begin{matrix}0 & 1 \\ 1 & 0 \\ - 1 & 0\end{matrix}\right] , \frac{1}{\sqrt{3}} \left[\begin{matrix}0 & 1 \\ 1 & 0 \\ j & 0\end{matrix}\right] , or \frac{1}{\sqrt{3}} \left[\begin{matrix}0 & 1 \\ 1 & 0 \\ - j & 0\end{matrix}\right] .$

32. The method according to claim 31, wherein the fourth codeword is $\frac{1}{\sqrt{3}} \left[\begin{matrix}1 & 0 \\ 1 & 0 \\ 0 & 1\end{matrix}\right]$ or $\frac{1}{\sqrt{3}} \left[\begin{matrix}1 & 0 \\ 0 & 1 \\ 1 & 0\end{matrix}\right]$.

33. The method according to claim 24, wherein before transmitting, by the network device, the TPMI to the terminal device, the method further comprises:
receiving, by the network device, a precoding matrix set capable of supporting a full power transmission or a TPMI set capable of supporting a full power transmission from the terminal device, wherein a TPMI in the TPMI set corresponds to a precoding matrix in a predefined codebook, and both a precoding matrix in the precoding matrix set and the precoding matrix corresponding to the TPMI in the TPMI set are matrices with 3 rows.

34. The method according to claim 33, wherein receiving, by the network device, the precoding matrix set capable of supporting the full power transmission or the TPMI set capable of supporting the full power transmission from the terminal device comprises:
receiving, by the network device, a bitmap from the terminal device, wherein each bit of the bitmap corresponds to a precoding matrix set capable of supporting the full power transmission or a TPMI set capable of supporting the full power transmission; or the terminal device indicating a precoding matrix set capable of supporting the full power transmission or a TPMI set capable of supporting the full power transmission, from a plurality of predefined precoding matrix sets or a plurality of predefined TPMI sets.

35. The method according to claim 34, wherein in a case where the terminal device only supports a non-coherent codebook, the bitmap comprises 2 bits,
wherein one bit indicates whether a precoding matrix $\frac{1}{\sqrt{3}} \left[\begin{matrix}1 \\ 0 \\ 0\end{matrix}\right]$ supports the full power transmission, or indicates whether a TPMI corresponding to the precoding matrix $\frac{1}{\sqrt{3}} \left[\begin{matrix}1 \\ 0 \\ 0\end{matrix}\right]$ supports the full power transmission; and
the other bit indicates whether a precoding matrix $\frac{1}{\sqrt{3}} \left[\begin{matrix}1 & 0 \\ 0 & 1 \\ 0 & 0\end{matrix}\right]$ supports the full power transmission, or indicates whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission.

36. The method according to claim 34, wherein in a case where the terminal device only supports a non-coherent codebook, the bitmap comprises 2 bits,
wherein one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or indicates whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission, or indicates whether TPMIs corresponding to the precoding matrices $\frac{1}{\sqrt{3}} \left[\begin{matrix}1 & 0 \\ 0 & 1 \\ 0 & 0\end{matrix}\right]$, $\frac{1}{\sqrt{3}} \left[\begin{matrix}1 & 0 \\ 0 & 0 \\ 0 & 1\end{matrix}\right]$ and $\frac{1}{\sqrt{3}} \left[\begin{matrix}0 & 0 \\ 1 & 0 \\ 0 & 1\end{matrix}\right]$ support the full power transmission.

37. The method according to claim 34, wherein in a case where the terminal device only supports a non-coherent codebook, the bitmap comprises 6 bits, wherein each bit respectively indicates following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission;
whether a precoding matrix $\frac{1}{\sqrt{3}} \left[\begin{matrix}1 & 0 \\ 0 & 1 \\ 0 & 0\end{matrix}\right]$ supports the full power transmission, or whether a TPMI corresponding to the precoding matrix $\frac{1}{\sqrt{3}} \left[\begin{matrix}1 & 0 \\ 0 & 1 \\ 0 & 0\end{matrix}\right]$ supports the full power transmission;
whether a precoding matrix $\frac{1}{\sqrt{3}} \left[\begin{matrix}1 & 0 \\ 0 & 0 \\ 0 & 1\end{matrix}\right]$ supports the full power transmission, or whether a TPMI corresponding to the precoding matrix $\frac{1}{\sqrt{3}} \left[\begin{matrix}1 & 0 \\ 0 & 0 \\ 0 & 1\end{matrix}\right]$ supports the full power transmission; and
whether a precoding matrix $\frac{1}{\sqrt{3}} \left[\begin{matrix}0 & 0 \\ 1 & 0 \\ 0 & 1\end{matrix}\right]$ supports the full power transmission, or whether a TPMI corresponding to the precoding matrix $\frac{1}{\sqrt{3}} \left[\begin{matrix}0 & 0 \\ 1 & 0 \\ 0 & 1\end{matrix}\right]$ supports the full power transmission.

38. The method according to claim 34, wherein in a case where the terminal device supports a partially coherent codebook, the bitmap comprises 2 bits,
wherein one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and
the other bit indicates whether a precoding matrix $\frac{1}{\sqrt{3}} \left[\begin{matrix}1 \\ 0 \\ x\end{matrix}\right]$ supports the full power transmission, or whether a TPMI corresponding to the precoding matrix $\frac{1}{\sqrt{3}} \left[\begin{matrix}1 \\ 0 \\ x\end{matrix}\right]$ supports the full power transmission;
or
wherein one bit indicates whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
the other bit indicates whether a precoding matrix $\frac{1}{\sqrt{3}} \left[\begin{matrix}1 \\ x \\ 0\end{matrix}\right]$ supports the full power transmission, or whether a TPMI corresponding to the precoding matrix $\frac{1}{\sqrt{3}} \left[\begin{matrix}1 \\ x \\ 0\end{matrix}\right]$ supports the full power transmission,
wherein x is a non-zero QPSK element.

39. The method according to claim 34, wherein in a case where the terminal device supports a partially coherent codebook, the bitmap comprises 2 bits,
wherein one bit indicates whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission; and
the other bit indicates whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and
$\frac{1}{\sqrt{3}} \left[\begin{matrix}1 & 1 \\ 0 & 0 \\ j & - j\end{matrix}\right]$ support the full power transmission;
or
wherein one bit indicates whether $\frac{1}{\sqrt{3}} \left[\begin{matrix}0 \\ 0 \\ 1\end{matrix}\right]$ supports the full power transmission, or whether a TPMI corresponding to the $\frac{1}{\sqrt{3}} \left[\begin{matrix}0 \\ 0 \\ 1\end{matrix}\right]$ supports the full power transmission; and
the other bit indicates whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission,
wherein x is a non-zero QPSK element.

40. The method according to claim 34, wherein in a case where the terminal device supports a partially coherent codebook, the bitmap comprises 2 bits,
wherein one bit indicates whether precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission, or whether TPMIs corresponding to the precoding matrices $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$ support the full power transmission; and
the other bit indicates whether precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission, or whether TPMIs corresponding to the precoding matrices $\frac{1}{\sqrt{3}} \left[\begin{matrix}1 & 0 \\ 0 & x \\ 0 & 0\end{matrix}\right] , \frac{1}{\sqrt{3}} \left[\begin{matrix}1 & 0 \\ 0 & 0 \\ 0 & x\end{matrix}\right]$ and $\frac{1}{\sqrt{3}} \left[\begin{matrix}0 & 0 \\ 1 & 0 \\ 0 & x\end{matrix}\right]$ support the full power transmission,
wherein x is a non-zero QPSK element.

41. The method according to claim 34, wherein in a case where the terminal device supports a partially coherent codebook, the bitmap comprises 4 bits, wherein the 4 bits respectively indicate following content:
whether a precoding matrix $\frac{1}{\sqrt{3}} \left[\begin{matrix}1 \\ 0 \\ 0\end{matrix}\right]$ supports the full power transmission, or whether a TPMI corresponding to the precoding matrix $\frac{1}{\sqrt{3}} \left[\begin{matrix}1 \\ 0 \\ 0\end{matrix}\right]$ supports the full power transmission;
whether a precoding matrix $\frac{1}{\sqrt{3}} \left[\begin{matrix}0 \\ 1 \\ 0\end{matrix}\right]$ supports the full power transmission, or whether a TPMI corresponding to the precoding matrix $\frac{1}{\sqrt{3}} \left[\begin{matrix}0 \\ 1 \\ 0\end{matrix}\right]$ supports the full power transmission;
whether a precoding matrix $\frac{1}{\sqrt{3}} \left[\begin{matrix}0 \\ 0 \\ 1\end{matrix}\right]$ supports the full power transmission, or whether a TPMI corresponding to the precoding matrix $\frac{1}{\sqrt{3}} \left[\begin{matrix}0 \\ 0 \\ 1\end{matrix}\right]$ supports the full power transmission; and
whether precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether TPMIs corresponding to the precoding matrices $\frac{1}{\sqrt{3}} \left[\begin{matrix}1 \\ x \\ 0\end{matrix}\right] , \frac{1}{\sqrt{3}} \left[\begin{matrix}1 & 1 \\ 1 & - 1 \\ 0 & 0\end{matrix}\right]$ and $\frac{1}{\sqrt{3}} \left[\begin{matrix}1 & 1 \\ j & - j \\ 0 & 0\end{matrix}\right]$ support the full power transmission, or whether precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support full power transmission, or whether TPMIs corresponding to the precoding matrices $\frac{1}{\sqrt{3}} \left[\begin{matrix}1 \\ 0 \\ x\end{matrix}\right] , \frac{1}{\sqrt{3}} \left[\begin{matrix}1 & 1 \\ 0 & 0 \\ 1 & - 1\end{matrix}\right]$ and $\frac{1}{\sqrt{3}} \left[\begin{matrix}1 & 1 \\ 0 & 0 \\ j & - j\end{matrix}\right]$ support the full power transmission,
wherein x is a non-zero QPSK element.

42. The method according to claim 34, wherein each of the plurality of predefined precoding matrix sets or each of the plurality of predefined TPMI sets corresponds to a respective precoding matrix set that comprises a first precoding matrix set, a second precoding matrix set and a third precoding matrix set; or comprises a first precoding matrix set, a second precoding matrix set and a fourth precoding matrix set; or comprises a first precoding matrix set, a second precoding matrix set, a third precoding matrix set and a fourth precoding matrix set,
wherein the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$; and
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

43. The method according to claim 34, wherein in a case where the terminal device supports a partially coherent codebook or a fully coherent codebook, each of the plurality of predefined precoding matrix sets or each of the plurality of predefined TPMI sets corresponds to a respective precoding matrix set that comprises a first precoding matrix set, a second precoding matrix set, a fifth precoding matrix set and a sixth precoding matrix set, and further comprises at least one of a third precoding matrix set or a fourth precoding matrix set,
wherein the first precoding matrix set is $\left\{\frac{1}{\sqrt{3}}\left[\begin{matrix}1 \\ 0 \\ 0\end{matrix}\right]\right\}$;
the second precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 0 \\ 0 & 1\end{matrix}\right]\right\}$ ;
the third precoding matrix set is $\left\{\frac{1}{\sqrt{3}}\left[\begin{matrix}1 & 0 \\ 0 & 1 \\ 0 & 0\end{matrix}\right]\right\}$ or $\left\{\frac{1}{\sqrt{3}}\left[\begin{matrix}1 & 0 \\ 0 & 0 \\ 0 & 1\end{matrix}\right]\right\}$;
the fourth precoding matrix set is $\left\{\frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$;
the fifth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right]\right\}$ ; and
the sixth precoding matrix set is $\left\{\frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$.

44. The method according to claim 43, wherein each of the plurality of predefined precoding matrix sets or each of the plurality of predefined TPMI sets corresponds to the respective precoding matrix set that further comprises a seventh precoding matrix set and/or an eighth precoding matrix set,
wherein the seventh precoding matrix set is $\left\{\frac{1}{\sqrt{3}}\left[\begin{matrix}0 \\ 1 \\ 0\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right], \frac{1}{\sqrt{3}}\left[\begin{matrix}1 \\ 0 \\ - j\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}0 \\ 0 \\ 1\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right], \frac{1}{\sqrt{3}}\left[\begin{matrix}1 \\ - j \\ 0\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right]\right\}$ ; and
the eighth precoding matrix set is $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}1 \\ 1 \\ 0\end{matrix}\right], \frac{1}{\sqrt{3}}\left[\begin{matrix}1 \\ - 1 \\ 0\end{matrix}\right], \frac{1}{\sqrt{3}}\left[\begin{matrix}1 \\ j \\ 0\end{matrix}\right],\right. \frac{1}{\sqrt{3}} \left[\begin{matrix}1 \\ - j \\ 0\end{matrix}\right] ,$ $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \left.\frac{1}{\sqrt{3}}\left[\begin{matrix}0 & 0 \\ 1 & 0 \\ 0 & 1\end{matrix}\right]\right\}$ or $\left\{\frac{1}{\sqrt{3}}\left[\begin{matrix}1 \\ 0 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 \\ 0 \\ 1\end{matrix}\right], \frac{1}{\sqrt{3}}\left[\begin{matrix}1 \\ 0 \\ - 1\end{matrix}\right], \frac{1}{\sqrt{3}}\left[\begin{matrix}1 \\ 0 \\ j\end{matrix}\right],\right.$ $\frac{1}{\sqrt{3}} \left[\begin{matrix}1 \\ 0 \\ - j\end{matrix}\right] , \frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \left.\frac{1}{\sqrt{3}}\left[\begin{matrix}0 & 0 \\ 1 & 0 \\ 0 & 1\end{matrix}\right]\right\}$.

45. The method according to any one of claims 24 to 44, wherein before transmitting, by the network device, the TPMI to the terminal device, the method further comprises:
receiving, by the network device, a sounding reference signal (SRS) from the terminal device, the SRS comprising 3 antenna ports; and
determining, by the network device, a precoding matrix from a pre-agreed codebook based on the SRS, the TPMI being used to indicate the precoding matrix.

46. The method according to any one of claims 24 to 45, wherein transmitting, by the network device, the TPMI to the terminal device comprises:
transmitting, by the network device, the TPMI and indication information of the number of transmission layers to the terminal device, wherein the TPMI and the indication information of the number of transmission layers are indicated through a same information field.

47. A terminal device, comprising:
a first transceiver module, configured to receive a transmit precoding matrix indicator (TPMI) transmitted by a network device; and
a first processing module, configured to determine a precoding matrix from a codebook corresponding to a number of transmission layers based on the TPMI, and performs precoding on uplink data using the precoding matrix, wherein each codeword in the codebook is a matrix with 3 rows.

48. A network device, comprising:
a second transceiver module, configured to transmit a transmit precoding matrix indicator (TPMI) to a terminal device; and receive data precoded using a precoding matrix by the terminal device,
wherein the precoding matrix is determined from a codebook corresponding to a number of transmission layers based on the TPMI, and each codeword in the codebook is a matrix with 3 rows.

49. A terminal device, comprising: a processor and a memory, wherein the memory is configured to store a computer program, and the processor is configured to invoke and run the computer program stored in the memory, to enable the terminal device to perform the method according to any one of claims 1 to 23.

50. A network device, comprising: a processor and a memory, wherein the memory is configured to store a computer program, and the processor is configured to invoke and run the computer program stored in the memory, to enable the network device to perform the method according to any one of claims 24 to 46.

51. A chip, comprising: a processor, configured to invoke a computer program from a memory and run the computer program, to enable a device equipped with the chip to perform the method according to any one of claims 1 to 46.

52. A computer-readable storage medium, configured to store a computer program, wherein the computer program, when executed by a device, enables the device to perform the method according to any one of claims 1 to 46.

53. A computer program product, comprising: computer program instructions, wherein the computer program instructions enable a computer to perform the method according to any one of claims 1 to 46.

54. A computer program, wherein the computer program enables a computer to perform the method according to any one of claims 1 to 46.
